# EUROPEAN PATENT APPLICATION

(11) **EP 4 604 438 A1**
(43) Date of publication of application: **20.08.2025**
(21) Application number: 25151090.5
(22) Date of filing: 10.01.2025
(51) Int. Cl.: H04L 5/00, H04L 5/14, H04W 72/0453

(54) **METHOD AND COMMUNICATION DEVICE FOR HANDLING A DOWNLINK SIGNAL RECEPTION**

(30) Priority: 08.01.2025 US 202519014178; 17.02.2024 US 202463554956 P
(71) Applicant: Acer Incorporated, New Taipei City 221 (TW)
(72) Inventor: Chen, Jen-Hsien, 221 New Taipei City (TW); Lee, Chien-Min, 221 New Taipei City (TW); Lo, Li-Chung, 221 New Taipei City (TW)
(74) Representative: Straus, Alexander

(57) **Abstract**

A method for a communication device (14) handling a DL signal reception includes: receiving a first configuration from a network to indicate a subband non-overlapping full duplex (SBFD) resource, wherein the first configuration indicates a time period for the SBFD resource and indicates at least one DL subband and a UL subband for the SBFD resource (302); receiving a second configuration from the network to indicate a periodic DL signal reception, wherein the second configuration indicates a first frequency domain resource for the periodic DL signal reception (304); receiving a third configuration from the network to indicate a bandwidth part (BWP) configuration; and performing at least one communication operation with the network according to the first configuration, the second configuration and the third configuration.

## Description

### Field of the Invention

The present invention relates to methods and a communication device used in a wireless communication system, and more particularly, to methods and a communication device for handling a downlink (DL) signal reception.

### Background of the Invention

A long-term evolution (LTE) system supporting the 3rd Generation Partnership Project (3GPP) Rel-8 standard and/or the 3GPP Rel-9 standard is developed by the 3GPP as a successor of the universal mobile telecommunication system (UMTS) for further enhancing performance of the UMTS to satisfy increasing needs of users.

An LTE-advanced (LTE-A) system, as its name implies, is an evolution of the LTE system. The LTE-A system targets faster switching between power states, improves performance at the coverage edge of an evolved Node-B (eNB), increases peak data rate and throughput, and includes advanced techniques, such as carrier aggregation (CA), uplink (UL) multiple-input multiple-output (UL-MIMO), etc.

A next generation radio access network (NG-RAN) supporting the 3GPP Rel-15 standard - the 3GPP Rel-19 standard is developed for further enhancing the LTE-A system. The NG-RAN includes one or more next generation Node-Bs (gNBs), and has properties of wider operation bands, different numerologies for different frequency ranges, massive MIMO, advanced channel codings, etc.

A subband non-overlapping Full Duplex (SBFD) is a duplex mode with a time-division duplexing (TDD) carrier split into subbands to enable simultaneously performing the transmission and the reception in a same time period. Together with cross-subband scheduling, a network and a communication device obtain an increased UL throughput and a decreased latency. However, the network and the communication device suffer a decreased downlink (DL) throughput from the SBFD, which causes that a DL signal reception(s) is not performed successfully. Thus, how to handling a DL signal reception is an important problem to be solved.

### Summary of the Invention

This in mind, the present invention aims at providing methods and a communication device for handling a downlink (DL) signal reception to solve the abovementioned problem.

This is achieved by methods and a communication device for handling a DL signal reception according to the independent claims, respectively. The dependent claims pertain to corresponding further developments and improvements.

As will be seen more clearly from the detailed description following below, a claimed method for a communication device handling a DL signal reception comprises: receiving a first configuration from a network to indicate a subband non-overlapping full duplex (SBFD) resource, wherein the first configuration indicates a time period for the SBFD resource and indicates at least one DL subband and a UL subband for the SBFD resource; receiving a second configuration from the network to indicate a periodic DL signal reception, wherein the second configuration indicates a first frequency domain resource for the periodic DL signal reception; receiving a third configuration from the network to indicate a bandwidth part (BWP) configuration; and performing at least one communication operation with the network according to the first configuration, the second configuration and the third configuration.

A claimed communication device for handling a DL signal reception comprises: at least one storage device; and at least one processing circuit, coupled to the at least one storage device, wherein the at least one storage device is configured to store instructions, and the at least one processing circuit is configured to execute the instructions of: receiving a first configuration from a network to indicate a subband non-overlapping full duplex (SBFD) resource, wherein the first configuration indicates a time period for the SBFD resource and indicates at least one DL subband and a UL subband for the SBFD resource; receiving a second configuration from the network to indicate a periodic DL signal reception, wherein the second configuration indicates a first frequency domain resource for the periodic DL signal reception; receiving a third configuration from the network to indicate a bandwidth part (BWP) configuration; and performing at least one communication operation with the network according to the first configuration, the second configuration and the third configuration.

A claimed method for a network configuring a DL signal reception comprises: transmitting a first configuration to a communication device to indicate a subband non-overlapping full duplex (SBFD) resource, wherein the first configuration indicates a time period for the SBFD resource and indicates at least one DL subband and a UL subband for the SBFD resource; transmitting a second configuration to the communication device to indicate a periodic DL signal reception, wherein the second configuration indicates a first frequency domain resource for the periodic DL signal reception; transmitting a third configuration to the communication device to indicate a bandwidth part (BWP) configuration; and performing at least one communication operation with the communication device according to the first configuration, the second configuration and the third configuration.

### Brief Description of the Drawings

In the following, the invention is further illustrated by way of example, taking reference to the following drawings.
FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a schematic diagram of a monitoring according to an example of the present invention.
FIG. 5 is a schematic diagram of a monitoring according to an example of the present invention.
FIG. 6 is a schematic diagram of a monitoring according to an example of the present invention.
FIG. 7 is a schematic diagram of a monitoring according to an example of the present invention.
FIG. 8 is a schematic diagram of a monitoring according to an example of the present invention.
FIG. 9 is a schematic diagram of a monitoring according to an example of the present invention.
FIG. 10 is a schematic diagram of a monitoring according to an example of the present invention.
FIG. 11 is a schematic diagram of a CORSET resource determination according to an example of the present invention.
FIG. 12 is a schematic diagram of a CORSET resource determination according to an example of the present invention.
FIG. 13 is a schematic diagram of a CORSET resource determination according to an example of the present invention.
FIG. 14 is a schematic diagram of a CORSET resource determination according to an example of the present invention.
FIG. 15 is a schematic diagram of a CORSET resource determination according to an example of the present invention.
FIG. 16 is a schematic diagram of a CORSET resource determination according to an example of the present invention.
FIG. 17 is a schematic diagram of a CORSET resource determination according to an example of the present invention.
FIG. 18 is a schematic diagram of a CORSET resource determination according to an example of the present invention.
FIG. 19 is a schematic diagram of a CORSET resource determination according to an example of the present invention.
FIG. 20 is a schematic diagram of a CORSET resource determination according to an example of the present invention.
FIG. 21 is a schematic diagram of a candidate DL signal reception according to an example of the present invention.
FIG. 22 is a flowchart of a process according to an example of the present invention.
FIG. 23 is a flowchart of a process according to an example of the present invention.
FIG. 24 is a schematic diagram of a candidate DL signal reception according to an example of the present invention.
FIG. 25 is a flowchart of a process according to an example of the present invention.

### Detailed Description

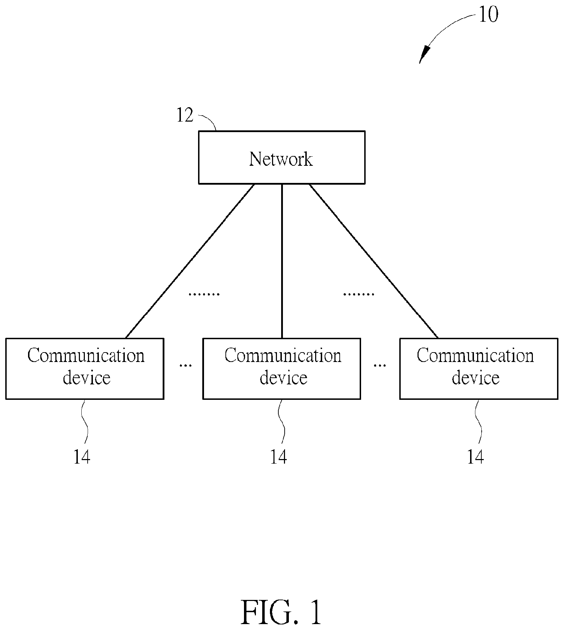

FIG. 1 is a schematic diagram of a wireless communication system 10 according to an example of the present invention. The wireless communication system 10 is briefly composed of a network 12 and a plurality of communication devices 14. The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the network 12 and a communication device 14 may communicate with each other via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the network 12 and a communication device 14 may communicate with each other via multiple serving cells (e.g., multiple serving carriers) including a primary cell (e.g., primary component carrier) and one or more secondary cells (e.g., secondary component carriers).

In FIG. 1, the network 12 and the communication devices 14 are simply utilized for illustrating the structure of the wireless communication system 10. Practically, the network 12 may be a universal terrestrial radio access network (UTRAN) including at least one Node-B (NB) in a universal mobile telecommunications system (UMTS). In one example, the network 12 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 12 may be a next generation radio access network (NG-RAN) including at least one next generation Node-B (gNB) and/or at least one fifth generation (5G) base station (BS). In one example, the gNB or the 5G BS of network 12 may include a NTN Gateway and a NTN payload. In one example, the gNB or the 5G BS of network 12 may be a transmission reception point (TRP). In one example, the network 12 may be any BS conforming to a specific communication standard to communicate with a communication device 14.

A new radio (NR) is a standard defined for a 5G system (or 5G network) to provide a unified air interface with better performance. gNBs are deployed to realize the 5G system, which supports advanced features such as enhanced Mobile Broadband (eMBB), Ultra Reliable Low Latency Communications (URLLC), massive Machine Type Communications (mMTC), etc. The eMBB provides broadband services with a greater bandwidth and a low/moderate latency. The URLLC provides applications (e.g., end-to-end communication) with properties of a higher reliability and a low latency. The examples of the applications include an industrial internet, smart grids, infrastructure protection, remote surgery and an intelligent transportation system (ITS). The mMTC is able to support internet-of-things (IoT) of the 5G system which include billions of connected devices and/or sensors.

Furthermore, the network 12 may also include at least one of the UTRAN/E-UTRAN/NG-RAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), Access and Mobility Management Function (AMF), Session Management Function (SMF), User Plane Function (UPF), Authentication Server Function (AUSF), etc. In one example, after the network 12 receives information transmitted by a communication device 14, the information may be processed only by the UTRAN/E-UTRAN/NG-RAN and decisions corresponding to the information are made at the UTRAN/E-UTRAN/NG-RAN. In one example, the UTRAN/E-UTRAN/NG-RAN may forward the information to the core network, and the decisions corresponding to the information are made at the core network after the core network processes the information. In one example, the information may be processed by both the UTRAN/E-UTRAN/NG-RAN and the core network, and the decisions are made after coordination and/or cooperation are performed by the UTRAN/E-UTRAN/NG-RAN and the core network.

A communication device 14 may be a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, or combination thereof. In addition, the network 12 and the communication device 14 can be seen as a transmitter or a receiver according to direction (i.e., transmission direction), e.g., for an uplink (UL), the communication device 14 is the transmitter and the network 12 is the receiver, and for a downlink (DL), the network 12 is the transmitter and the communication device 14 is the receiver.

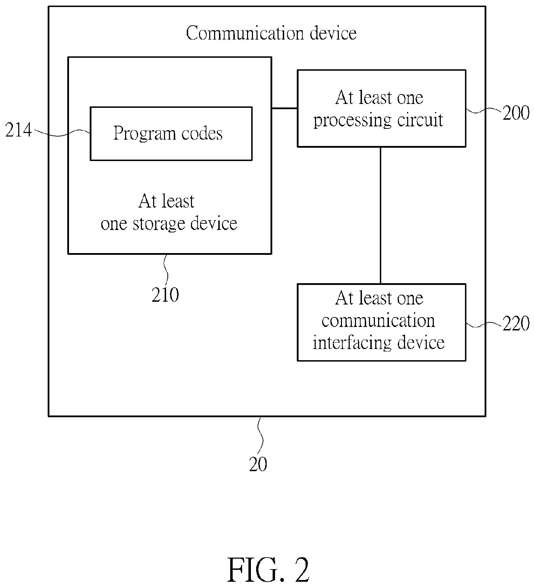

FIG. 2 is a schematic diagram of a communication device 20 according to an example of the present invention. The communication device 20 may be a communication device 14 or the network 12 shown in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

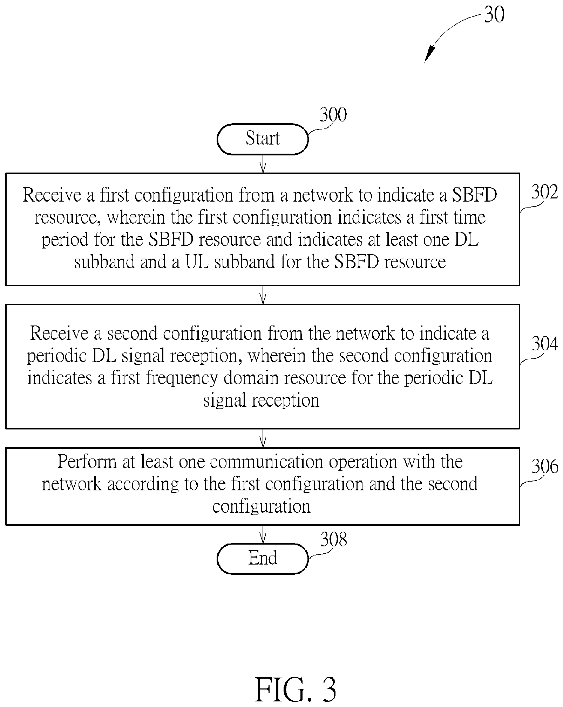

FIG. 3 is a flowchart of a process 30 according to an example of the present invention. The process 30 may be utilized in a communication device (e.g., a communication device 14 in FIG. 1 or the communication device 20 in FIG. 2), to handle a DL signal reception. The process 30 may be compiled into the program codes 214 and includes the following steps:

| | |
|---|---|
| Step 300: | Start. |
| Step 302: | Receive a first configuration from a network to indicate a subband non-overlapping full duplex (SBFD) resource, wherein the first configuration indicates a first time period for the SBFD resource and indicates at least one DL subband and a UL subband for the SBFD resource. |
| Step 304: | Receive a second configuration from the network to indicate a periodic DL signal reception, wherein the second configuration indicates a first frequency domain resource for the periodic DL signal reception. |
| Step 306: | Perform at least one communication operation with the network according to the first configuration and the second configuration. |
| Step 308: | End. |

According to the process 30, the communication device receives a first configuration from a network to indicate a SBFD resource. The first configuration indicates a first time period for the SBFD resource and indicates at least one DL subband and a UL subband for the SBFD resource. The communication device receives a second configuration from the network to indicate a periodic DL signal reception. The second configuration indicates a first frequency domain resource for the periodic DL signal reception. Then, the communication device performs at least one communication operation with the network according to the first configuration and the second configuration. In one example, the communication device may perform (e.g., monitor) the periodic DL signal reception in the first time period and the first frequency domain resource.

Realization of the process 30 is not limited to the above description. The following examples may be applied to realize the process 30.

In one example, the communication device receives a third configuration from the network to indicate at least one pattern. In one example, the third configuration comprises (e.g., is) a higher layer configuration. In one example, each of at least one period of the at least one pattern may be 0.5, 0.625, 1, 1.25, 2, 2.5, 5 or 10 milliseconds (ms), but is mot limited herein.

In one example, the communication device receives a fourth configuration to indicate a bandwidth part (BWP) configuration. In one example, the BWP configuration indicates a BWP for the communication device. In one example, the communication device performs the at least one communication operation with the network according to the first configuration, the second configuration and the fourth configuration.

In one example, the communication device receives a fifth configuration from the network. In one example, the fifth configuration comprises at least one of a first slot parameter, at least one monitoring bit map, a repetition number, a duration and at least one control resource set (CORESET) identity (ID).

In one example, the first slot parameter indicates a number of slots for a monitoring (e.g., a Physical DL Control Channel (PDCCH) monitoring) configured as a periodicity or an offset. In one example, the first slot parameter may be 1, 2, 4, 5, 8, 10, 20, 40, 80, 160, 320, 640, 1280 or 2560 slots, but is mot limited herein. In one example, the first slot parameter is greater than a second slot parameter. In one example, the first slot parameter is less than the second slot parameter. In one example, the second slot parameter indicates a periodicity for configuring slot type (e.g., a UL slot, a DL slot, a flexible slot and/or a SBFD slot).

In one example, each monitoring bit map of the at least one monitoring bit map comprises a first plurality of bits. In one example, the first plurality of bits represent (e.g., correspond to) a part of the slots within the periodicity indicated by the first slot parameter. For example, the 1^{st} bit of the monitoring bit map corresponds to the 1^{st} slot in the slots, the 2^{nd} bit of the monitoring bit map corresponds to the 2^{nd} slot in the slots, and so on. In one example, the bit length of the monitoring bit map is not greater than the first slot parameter. In one example, the bit length of the monitoring bit map is associated with the second slot parameter (e.g., a number of slots within the periodicity indicated by second slot parameter).

In one example, the communication device determines whether to perform the monitoring (e.g., the PDCCH monitoring) in a slot according to the monitoring bit map. In one example, the communication device disables performing the monitoring (e.g., the PDCCH monitoring) in the slot in response to a bit of the monitoring bit map corresponding to the slot being a first value (e.g., "0"). In one example, the communication device performs the monitoring (e.g., the PDCCH monitoring) in the slot in response to the bit of the monitoring bit map corresponding to the slot being a second value (e.g., "1"). In one example, the communication device disables performs the monitoring (e.g., the PDCCH monitoring) in the slot in response to the bit of the monitoring bit map corresponding to the slot being the second value (e.g., "1") and the slot not overlapping with the SBFD resource.

In one example, the at least one monitoring bit map comprises a first monitoring bit map and a second monitoring bit map. In one example, the communication device performs the monitoring (e.g., the PDCCH monitoring) in an even time period within the periodicity indicated by the first slot parameter according to the first monitoring bit map. In one example, the communication device performs the monitoring (e.g., the PDCCH monitoring) in an odd time period within the periodicity indicated by the first slot parameter according to the second monitoring bit map. That is, in a case of multiple monitoring bit maps, slots in different time periods within the periodicity indicated by the first slot parameter may be configured according to different monitoring bit maps. In one example, a first plurality of slots in the even time period are configured according to a first pattern. In one example, a second plurality of slots in the odd time period are configured according to a second pattern. In one example, the at least one pattern comprises the first pattern and the second pattern.

In one example, the repetition number indicates a number of repetitions of the monitoring bit map within the periodicity indicated by the first slot parameter. In one example, the communication device performs the monitoring (e.g., the PDCCH monitoring) in the slots according to the monitoring bit map and the repetition number. In one example, a product of the repetition number and the bit length is not greater than the first slot parameter. In one example, the repetition number is an integer. In one example, the communication device determines the repetition number according to the bit length and the first slot parameter.

In one example, the duration indicates a third plurality of slots that a search space (SS) lasts within the periodicity indicated by the first slot parameter (e.g., in every periodicity or offset). In one example, the third plurality of slots do not overlap with the SBFD resource. In one example, the third plurality of slots is consecutive slots except slots overlapping with the SBFD resource. In one example, the duration number is an integer. In one example, the communication device performs the monitoring (e.g., the PDCCH monitoring) in the periodicity indicated by the first slot parameter according to the duration in response to the SBFD resource not overlapping with the periodicity indicated by the first slot parameter. In one example, the communication device performs the monitoring (e.g., the PDCCH monitoring) in the periodicity indicated by the first slot parameter according to the monitoring bit map in response to the SBFD resource overlapping with the periodicity indicated by the first slot parameter.

In one example, the duration indicates a number of repetitions of the monitoring bit map within the periodicity indicated by the first slot parameter. In one example, the communication device performs the monitoring (e.g., the PDCCH monitoring) in the slots according to the monitoring bit map and the duration. In one example, a product of the duration and the bit length is not greater than the first slot parameter.

In one example, each of the at least one CORESET ID corresponds to a CORSET. In one example, the communication device performs the monitoring (e.g., the PDCCH monitoring) via the CORSET indicated by one of the at least one CORESET ID. In one example, the at least one CORSET ID is associated with a SS set.

In one example, the second configuration further indicates a second frequency domain resource for the periodic DL signal reception. In one example, the communication device receives a periodic DL signal for the periodic DL signal reception from the network via the second frequency domain resource in response to the periodic DL signal being within the first time period of the SBFD resource. In one example, the communication device disables receiving the periodic DL signal for the periodic DL signal reception from the network via the second frequency domain resource in response to the periodic DL signal not being within the first time period of the SBFD resource. In one example, the communication device receives the periodic DL signal for the periodic DL signal reception from the network via the first frequency domain resource in response to the periodic DL signal not being within the first time period of the SBFD resource.

In one example, the second configuration comprises at least one of a first resource bit map and an adaptation parameter. In one example, the communication device determines the first frequency domain resource in a second time period according to the first resource bit map. In one example, the second time period does not overlap with any SBFD resource. In one example, the SBFD resource comprises the at least one DL subband and the UL subband. In one example, the communication device determines the first frequency domain resource in the first time period according to at least one of the first resource bit map and the adaptation parameter. In one example, the first time period (e.g., completely) overlaps with the SBFD resource.

In one example, the first resource bit map indicates the first frequency domain resource in the second time period. In one example, the first resource bit map comprises a second plurality of bits. In one example, the second plurality of bits corresponds to a plurality of frequency parts of the BWP, respectively. For example, the 1^{st} bit of the first resource bit map corresponds to the lowest frequency part of the BWP, the 2^{nd} bit of the first resource bit map corresponds to the 2^{nd}-lowest frequency part of the BWP, and so on. In one example, a bit of the first resource bit map with a third value (e.g., "0") represents that a frequency part of the BWP corresponding to the bit does not overlap with the first frequency domain resource. In one example, the bit of the first resource bit map with a fourth value (e.g., "1") represents that the frequency part of the BWP corresponding to the bit overlaps with the first frequency domain resource. In one example, the communication device disables performing the monitoring (e.g., the PDCCH monitoring) in a frequency part of the BWP in response to a bit of the first resource bit map corresponding to the frequency part being the third value. In one example, the communication device performs the monitoring (e.g., the PDCCH monitoring) in the frequency part of the BWP in response to the bit of the first resource bit map corresponding to the frequency part being the fourth value.

In one example, the adaptation parameter comprises at least one of a second resource bit map, an offset, a direction indicator and an adaptation indicator. In one example, the second resource bit map indicates the second frequency domain resource in the first time period. It should be noted that the terms of "first resource bit map" and "first frequency domain resource" in the previous paragraph can be replaced by the terms of "second resource bit map" and "second frequency domain resource", respectively, and thus examples for the second resource bit map can be referred to the previous paragraph and are not narrated herein. In one example, the communication device obtains the second resource bit map from the second configuration. In one example, the communication device generates the second resource bit map by (e.g., circularly) shifting the bits in the first resource bit map according to at least one of the offset, the direction indicator and the adaptation indicator, e.g., in response to the second configuration not comprising the second resource bit map. In one example, the communication device determines the second frequency domain resource in the first time period according to the second resource bit map.

In one example, the offset indicates a bit offset for the first resource bit map. In one example, the offset further indicates a shift direction for the bit offset. In one example, the communication device (e.g., circularly) shifts the second plurality of bits in the first resource bit map toward a first direction (e.g., from left to right) in response to the offset being a positive value. In one example, the communication device (e.g., circularly) shifts the second plurality of bits in the first resource bit map toward a second direction (e.g., from right to left) in response to the offset being a negative value.

In one example, the direction indicator indicates the shift direction for the bit offset. In one example, the direction indicator comprises one bit. In one example, the communication device (e.g., circularly) shifts the second plurality of bits in the first resource bit map toward a third direction (e.g., from right to left) in response to the direction indicator being a fifth value (e.g., "0"). In one example, the communication device (e.g., circularly) shifts the second plurality of bits in the first resource bit map toward a fourth direction (e.g., from left to right) in response to the direction indicator being a sixth value (e.g., "1").

In one example, the adaptation indicator comprises a third plurality of bits. In one example, the 1^{st} bit of the adaptation indicator indicates the shift direction for the bit offset. In one example, the at least one remaining bit of the adaptation indicator indicates the bit offset. In one example, the communication device (e.g., circularly) shifts the second plurality of bits in the first resource bit map toward a fifth direction (e.g., from right to left) in response to the adaptation indicator being a seventh value (e.g., "0"). In one example, the communication device (e.g., circularly) shifts the second plurality of bits in the first resource bit map toward a sixth direction (e.g., from left to right) in response to the adaptation indicator being an eighth value (e.g., "1").

In one example, each bit of the first resource bit map represents (e.g., corresponds to) a first plurality of resource blocks (RBs) (e.g., six RBs of a CORSET). In one example, an RB index of the 1^{st} RB of the 1^{st} bit of the first resource bit map is a smallest RB index within the BWP. In one example, the smallest RB index is a multiple of a ninth value (e.g., 6). For example, the 1^{st} bit of the first resource bit map indicates RBs "6x"-"6x+5", the 2^{nd} bit of the first resource bit map indicates RBs "6(x+1)"-"6(x+1)+5", and so on. In one example, x is an integer. In one example, a bit of the first resource bit map with a tenth value (e.g., "0") represents that a frequency part of the BWP corresponding to the bit does not overlap with the first frequency domain resource. In one example, the bit of the first resource bit map with a eleventh value (e.g., "1") represents that the frequency part of the BWP corresponding to the bit overlaps with the first frequency domain resource. It should be noted that the terms of "first resource bit map" and "first frequency domain resource" in this paragraph can be replaced by the terms of "second resource bit map" and "second frequency domain resource", respectively.

In one example, the communication device determines at least one first RB of the first plurality of RBs to be valid for a bit of the first resource bit map in response to the at least one first RB (e.g., completely) overlapping with the at least one DL subband and at least one second RB of the first plurality of RBs (e.g., completely or partially) overlapping with the UL subband. In one example, the communication device determines the at least one second RB to be invalid for the bit of the first resource bit map. It should be noted that the term of "first resource bit map" in this paragraph can be replaced by the term of "second resource bit map".

In one example, the communication device determines the first frequency domain resource and/or the second frequency domain resource according to at least one of the first resource bit map, a location of the UL subband and a location of a guardband, when monitoring occasions (MOs) associated with the CORSET are within the first time period. In one example, the communication device selects a first bit and a second bit from the first resource bit map; and (e.g., circularly) shifts bits in the first resource bit map according to bit indexes of the first bit and the second bit, to generate the second resource bit map. In one example, the first bit is the 1^{st} bit which is an twelfth value (e.g., "1") in the first resource bit map, and the second bit is the 1^{st} bit of the first resource bit map that all RBs (e.g., completely) overlap with the at least one DL subband. In one example, the first bit is the last bit which is a thirteenth value (e.g., "1") of the first resource bit map, and the second bit is the last bit of the first resource bit map that all RBs (e.g., completely) overlap with the at least one DL subband.

In one example, the communication device does not expect that DL control information is carried in a part of the second frequency domain resource. In one example, the communication device disables performing the monitoring (e.g., the PDCCH monitoring or a SS set monitoring) in the part of the second frequency domain resource. In one example, the part of the second frequency domain resource not (e.g., completely) overlapping with the at least one DL subband.

In one example, the communication device is configured with the CORESET in the BWP. In one example, the communication device divides the CORESET into a plurality of resource element groups (REGs). In one example, the communication device groups the plurality of REGs into a plurality of REG bundles. In one example, each of the plurality of REG bundles comprises at least one first REG (e.g., two or six REGs). In one example, the plurality of REG bundles do not overlap in the frequency domain. In one example, the communication device groups the plurality of REG bundles into a plurality of control channel elements (CCEs). In one example, each of the plurality of CCEs comprises at least one second REG (e.g., six REGs). In one example, the plurality of CCEs do not overlap with each other in the frequency domain.

In one example, the communication device determines a first RB of the first frequency domain resource to be valid in response to the first RB (e.g., completely) overlapping with the at least one DL subband. In one example, the communication device determines a second RB of the first frequency domain resource to be invalid in response to the second RB (e.g., completely or partially) overlapping with the UL subband. It should be noted that the term of "first frequency domain resource" in this paragraph can be replaced by the term of "second frequency domain resource".

In one example, the communication device numbers the plurality of REGs (e.g., in an increasing order and/or in a time-first manner) in response to the plurality of REGs (i.e., the CORSET) (e.g., completely) overlapping with the second time period. In one example, the communication device numbers a part of the plurality of REGs (e.g., in an increasing order and/or in a time-first manner) in response to the plurality of REGs (i.e., the CORSET) (e.g., completely) overlapping with the first time period. In one example, the part of the plurality of REGs does not comprise any invalid RB. That is, the communication device does not number the REGs comprising the invalid RB. In one example, a number of the numbered REGs is a multiple of a fourteenth value (e.g., 6). In one example, the communication device disables performing the monitoring (e.g., the PDCCH monitoring) in a part of the numbered REGs in response to the number of the numbered REGs not being the multiple of the fourteenth value.

In one example, a greatest RB index of the CORSET in the UL subband is a multiple of a fifteenth value (e.g., 2, 3 or 6). In one example, a smallest RB index of the CORSET in the UL subband is the multiple of the fifteenth value (e.g., 2, 3 or 6).

In one example, the communication device partitions the first frequency domain resource (and/or the second frequency domain resource) according to a size with a second plurality of RBs, to generate a plurality of partitions. In one example, the plurality of partitions comprise (e.g., are) the plurality of REGs, the plurality of REG bundles or the plurality of CCEs, but are not limited herein. In one example, the network configures the size with the second plurality of RBs to the communication device according to a size parameter. In one example, the communication device indicates the size parameter to the network.

In one example, the communication device performs a plurality of channel estimations for the plurality of partitions, respectively. In one example, the communication device determines at least one third RB within a partition of the plurality of partitions (e.g., completely) overlapping with the at least one DL subband to be valid. In one example, the communication device determines at least one fourth RB within the partition (e.g., completely or partially) overlapping with the UL subband to be invalid in response to the partition overlapping with the at least one DL subband and the UL subband simultaneously. In one example, the communication device performs a channel estimation for the partition by the at least one third RB (e.g., only) overlapping with the at least one DL subband.

In one example, the communication device performs at least two channel estimations for the partition in response to the partition comprising a plurality of non-consecutive RBs. In one example, the plurality of non-consecutive RBs correspond to a plurality of non-consecutive RB indexes, respectively. In one example, the communication device performs the at least two channel estimations for the partition of the plurality of partitions in response to the partition comprising the plurality of non-consecutive RBs and the communication device being configured with a partition parameter. In one example, the network configures the partition parameter to the communication device. In one example, the communication device performs the plurality of channel estimations for the plurality of partitions, respectively, in response to the communication device not being configured with the partition parameter.

In one example, a plurality of partition indexes correspond to the plurality of partitions, and are consecutive values. In one example, each RB of the plurality of partitions does not (e.g., completely or partially) overlap with the UL subband. In one example, each RB of the plurality of partitions (e.g., completely) overlaps with the at least one DL subband.

In one example, the communication device determines the partition of the plurality of partitions to be valid in response to the partition (e.g., completely) overlapping with the at least one DL subband. In one example, the communication device determines the partition of the plurality of partitions to be invalid in response to the partition overlapping with the at least one DL subband and the UL subband simultaneously. In one example, the communication device determines the partition of the plurality of partitions to be invalid in response to the partition (e.g., completely or partially) overlapping with the UL subband. In one example, the communication device numbers (or renumbers) at least one valid partition with at least one updated partition index. In one example, the plurality of partitions comprise the at least one valid partition. In one example, each RB of the at least one valid partition does not (e.g., completely or partially) overlap with the UL subband. In one example, each RB of the at least one valid partition (e.g., completely) overlaps with the at least one DL subband. In one example, the communication device performs at least one channel estimation for the at least one valid partition.

In one example, the periodic DL signal for the periodic DL signal reception comprises (e.g., is associated with) a first plurality of candidate DL signals. In one example, the first plurality of candidate DL signals are associated with different SSs. In one example, the SSs are configured with a same link ID. In one example, the communication device disables receiving (e.g., monitoring) at least one first candidate DL signal of the first plurality of candidate DL signals from the network in response to the at least one first candidate DL signal (e.g., completely or partially) overlapping with the UL subband. In one example, the communication device receives (e.g., monitors) at least one second candidate DL signal of the first plurality of candidate DL signals from the network in response to the at least one second candidate DL signal (e.g., completely) overlapping with the at least one DL subband. In one example, the communication device disables combining the at least one first candidate DL signal and the at least one second candidate DL signal to decode the periodic DL signal in response to one of the at least one first candidate DL signal and the at least one second candidate DL signal (e.g., completely or partially) overlapping with the UL subband.

In one example, the periodic DL signal for the periodic DL signal reception is associated with two candidate DL signals. In one example, the two candidate DL signals are associated with two SSs, respectively. In one example, the two SSs are configured with a same link ID. In one example, the communication device combines the two candidate DL signals to decode the periodic DL signal and counts three candidate DL signals for the periodic DL signal in response to the two candidate DL signals not (e.g., completely or partially) overlapping with the UL subband. In one example, the communication device disables combining the two candidate DL signals to decode the periodic DL signal and counts one candidate DL signal for the periodic DL signal in response to one of the two candidate DL signals not (e.g., completely or partially) overlapping with the UL subband. In one example, the communication device counts zero candidate DL signals for the periodic DL signal in response to the two candidate DL signals (e.g., completely or partially) overlapping with the UL subband.

In one example, the second configuration further indicates a number of candidate DL signals for the periodic DL signal reception. In one example, the communication device determines whether a second plurality of candidate DL signals for the periodic DL signal reception overlap with the UL subband. In one example, the communication device selects at least one third candidate DL signal that does not (e.g., completely or partially) overlap with the UL subband from the second plurality of candidate DL signals. In one example, at least one third candidate DL signal is configured for an aggregation level (AL). In one example, the communication device determines the at least one third candidate DL signal to be valid for performing the monitoring (e.g., the PDCCH monitoring). In one example, a number of the at least one third candidate DL signal is not greater than the number of candidate DL signals for the periodic DL signal reception. In one example, the communication device disables selecting any candidate DL signal from the second plurality of candidate DL signals in response to the second plurality of candidate DL signals overlapping with the UL subband.

In one example, at least one RB of a valid candidate DL signal (e.g., one candidate DL signal of the at least one third candidate DL signal) overlaps with the at least one DL subband. In one example, a code rate of the valid candidate DL signal is not greater than a preconfigured code rate. In one example, the preconfigured code rate is preconfigured by the network.

In one example, the second configuration further indicates the number of candidate DL signals for the periodic DL signal reception. In one example, the periodic DL signal for the periodic DL signal reception is associated with a DCI format (e.g., a DCI format 2_0). In one example, the communication device searches a first candidate DL signal that does not (e.g., completely or partially) overlap with the UL subband for the DCI format in response to the number of candidate DL signals being one. In one example, the communication device searches the first candidate DL signal and a second candidate DL signal that do not (e.g., completely or partially) overlap with the UL subband for the DCI format in response to the number of candidate DL signals being two. In one example, each RB associated with the first candidate DL signal and the second candidate DL signal (e.g., completely) overlaps with the at least one DL subband.

In one example, the communication device receives a sixth configuration from the network to indicate the preconfigured code rate. In one example, the communication device receives the periodic DL signal for the periodic DL signal reception from the network in response to a code rate of the first frequency domain resource (and/or the second frequency domain resource) overlapping with the at least one DL subband not being greater than the preconfigured code rate. In one example, the communication device disables receiving the periodic DL signal for the periodic DL signal reception from the network in response to the code rate of the first frequency domain resource (and/or the second frequency domain resource) overlapping with the at least one DL subband being greater than the preconfigured code rate. In one example, the preconfigured code rate is an AL specific code rate or a SS set specific code rate.

In one example, the communication device disables combining two candidate DL signals for the periodic DL signal reception in response to at least one code rate for at least one of the two candidate DL signals being greater than the preconfigured code rate. In one example, the two candidate DL signals correspond to two different SS sets with a same link ID.

In one example, the second configuration further indicates a plurality of ALs for the periodic DL signal reception. In one example, the communication device receives the periodic DL signal for the periodic DL signal reception from the network in response to the code rate of the first frequency domain resource (and/or the second frequency domain resource) overlapping with the at least one DL subband not being greater than a minimum AL of the plurality of ALs. In one example, the communication device disables receiving the periodic DL signal for the periodic DL signal reception from the network in response to the code rate of the first frequency domain resource (and/or the second frequency domain resource) overlapping with the at least one DL subband being greater than the minimum AL of the plurality of ALs.

In one example, the communication device disables receiving the periodic DL signal for the periodic DL signal reception from the network in response to the first frequency domain resource (and/or the second frequency domain resource) (e.g., completely or partially) overlapping with the UL subband. In one example, the communication device receives the periodic DL signal for the periodic DL signal reception from the network in response to the first frequency domain resource (and/or the second frequency domain resource) not (e.g., completely or partially) overlapping with the UL subband. In one example, the communication device disables receiving the periodic DL signal for the periodic DL signal reception from the network in response to the first frequency domain resource (and/or the second frequency domain resource) overlapping with the UL subband and the at least one DL subband simultaneously and the code rate of the first frequency domain resource (and/or the second frequency domain resource) overlapping with the at least one DL subband being greater than the preconfigured code rate. In one example, the communication device receives the periodic DL signal for the periodic DL signal reception from the network in response to the first frequency domain resource (and/or the second frequency domain resource) overlapping with the UL subband and the at least one DL subband simultaneously and the code rate of the first frequency domain resource (and/or the second frequency domain resource) overlapping with the at least one DL subband not being greater than the preconfigured code rate.

In one example, the communication device disables performing the monitoring (e.g., the PDCCH monitoring) for the periodic DL signal reception in at least one CCE of the first frequency domain resource (and/or the second frequency domain resource) in response to the first frequency domain resource (and/or the second frequency domain resource) overlapping with the UL subband and the at least one DL subband simultaneously and the code rate of the at least one CCE overlapping with the at least one DL subband being greater than the preconfigured code rate. In one example, the communication device performs the monitoring (e.g., the PDCCH monitoring) for the periodic DL signal reception in the at least one CCE of the first frequency domain resource (and/or the second frequency domain resource) in response to the first frequency domain resource (and/or the second frequency domain resource) overlapping with the UL subband and the at least one DL subband simultaneously and the code rate of the at least one CCE overlapping with the at least one DL subband not being greater than the preconfigured code rate.

In one example, the communication device counts zero candidate DL signals for the periodic DL signal repetition, after disabling receiving the periodic DL signal. In one example, the communication device counts one candidate DL signal for the periodic DL signal repetition, after receiving the periodic DL signal. In one example, the communication device counts zero CCEs of the first frequency domain resource (and/or the second frequency domain resource) for the monitoring, after disabling performing the monitoring for the periodic DL signal reception in the at least one CCE. In one example, the communication device counts the at least one CCE of the first frequency domain resource (and/or the second frequency domain resource) for the monitoring, after performing the monitoring for the periodic DL signal reception in the at least one CCE. In one example, the communication device counts a total number of CCEs of the first frequency domain resource (and/or the second frequency domain resource) for the monitoring, after performing the monitoring for the periodic DL signal reception in the at least one CCE.

In one example, the communication device disables performing the monitoring (e.g., the PDCCH monitoring) for the periodic DL signal reception in a SS set associated with a CORSET in response to the SS set or the CORSET (e.g., completely or partially) overlapping with the UL subband. In one example, the communication device counts zero candidate DL signals for the SS set, after disabling performing the monitoring for the periodic DL signal reception in the SS set. In one example, the communication device counts zero CCEs for the SS set, after disabling performing the monitoring for the periodic DL signal reception in the SS set. In one example, the SS set comprises (e.g., is) a Type0-PDCCH common SS (CSS) set, a Type0A-PDCCH CSS set, a Type0B-PDCCH CSS set, a Type1-PDCCH CSS set, a Type1A-PDCCH CSS set, a Type2-PDCCH CSS set, a Type2A-PDCCH CSS or a Type3-PDCCH CSS set, but is not limited herein.

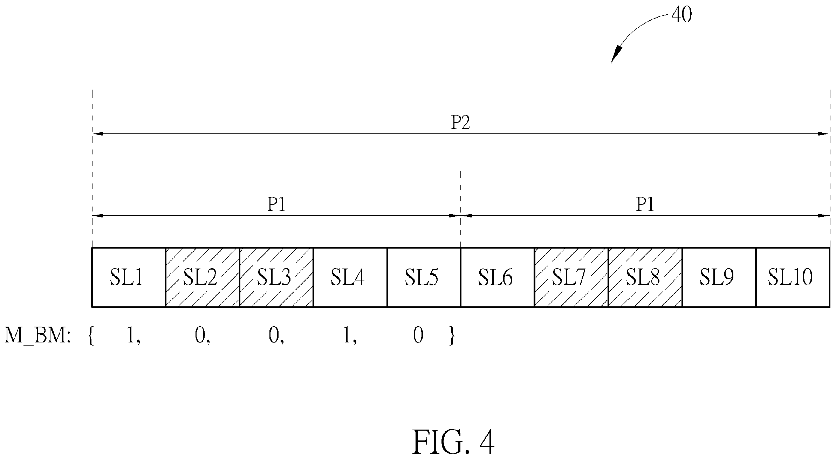

FIG. 4 is a schematic diagram of a monitoring 40 according to an example of the present invention. The communication device is configured with a periodicity P1 for configuring slot type of slots SL1-SL10. The periodicity P1 is five slots. Every five slots (i.e., the slots SL1-SL5 or SL6-SL10) are configured according to a pattern. In FIG. 4, the slots SL2-SL3 and SL7-SL8 are configured as SBFD slots which are shown as slash blocks. The communication device receives a configuration comprising a periodicity P2 for the monitoring and a monitoring bit map M_BM. The periodicity P2 is ten slots. The monitoring bit map M_BM is {1, 0, 0, 1, 0}, and the bits of the monitoring bit map M_BM correspond to the slots SL1-SL5, respectively.

In FIG. 4, the communication device performs the monitoring in the slots SL1 and SL4, since the 1^{st} bit and the 4^{th} bit of the monitoring bit map M_BM are " 1". The communication device disables performing the monitoring in the slots SL2, SL3 and SLS, since the 2^{nd} bit, the 3^{rd} bit and the 5^{th} bit of the monitoring bit map M_BM are "0". The communication device disables performing the monitoring in the slots SL6-SL10, since the slots SL6-SL10 do not correspond to the monitoring bit map M_BM.

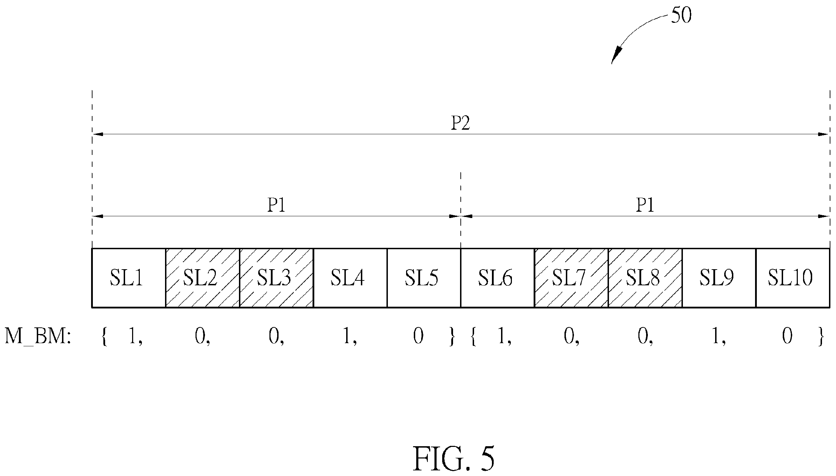

FIG. 5 is a schematic diagram of a monitoring 50 according to an example of the present invention. The communication device is configured with a periodicity P1 for configuring slot type of slots SL1-SL10. The periodicity P1 is five slots. Every five slots (i.e., the slots SL1-SL5 or SL6-SL10) are configured according to a pattern. In FIG. 5, the slots SL2-SL3 and SL7-SL8 are configured as SBFD slots which are shown as slash blocks.

In one example of FIG. 5, the communication device receives a configuration comprising a periodicity P2 for the monitoring, a monitoring bit map M_BM and a repetition number. The periodicity P2 is ten slots. The repetition number is two. The monitoring bit map M_BM is {1, 0, 0, 1, 0} corresponding to the slots SL1-SL5, and further corresponds to the slots SL6-SL10 in response to the repetition number. In one example of FIG. 5, the communication device receives the configuration comprising the periodicity P2 for the monitoring and the monitoring bit map M_BM. The periodicity P2 is ten slots, and the monitoring bit map M_BM is {1, 0, 0, 1, 0}. The communication device determines the repetition number according to the periodicity P2 and a number of bits of the monitoring bit map M_BM. In this example, the repetition number is two (10 ÷ 5 ≡ 2).

In FIG. 5, the communication device performs the monitoring in the slots SL1, SL4, SL6 and SL9, since the 1^{st} bit and the 4^{th} bit of the monitoring bit map M_BM are "1" and the repetition number is two. The communication device disables performing the monitoring in the slots SL2, SL3, SLS, SL7, SL8 and SL10, since the 2^{nd} bit, the 3^{rd} bit and the 5^{th} bit of the monitoring bit map M_BM are "0" and the repetition number is two.

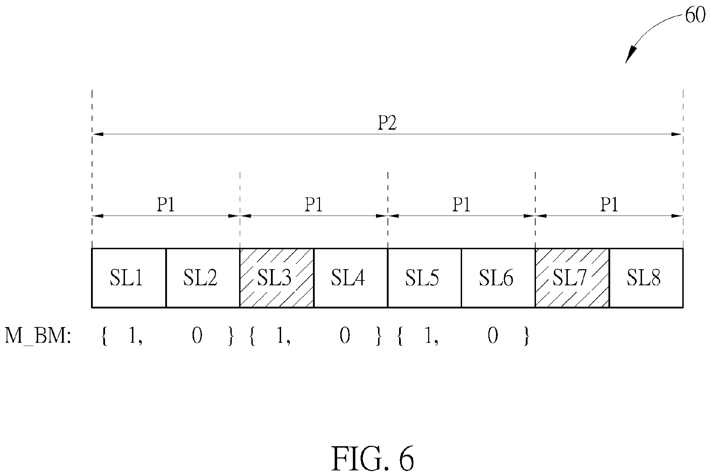

FIG. 6 is a schematic diagram of a monitoring 60 according to an example of the present invention. The communication device is configured with a periodicity P1 for configuring slot type of slots SL1-SL10. The periodicity P1 is two slots. Every two slots are configured according to a pattern. In FIG. 6, the slots SL1-SL2 and SL5-SL6 are configured according to one pattern, and the slots SL3-SL4 and SL7-SL8 are configured according to the other pattern. The slots SL3 and SL7 are configured as SBFD slots which are shown as slash blocks. The communication device receives a configuration comprising a periodicity P2 for the monitoring, a monitoring bit map M_BM and a repetition number. The periodicity P2 is eight slots. The repetition number is three. The monitoring bit map M_BM is {1, 0} corresponding to the slots SL1-SL2, and further corresponds to the slots SL3-SL4 and SL5-SL6 in response to the repetition number.

In FIG. 6, the communication device performs the monitoring in the slots SL1 and SLS, since the 1^{st} bit of the monitoring bit map M_BM is "1" and the repetition number is three. The communication device disables performing the monitoring in the slots SL2, SL4 and SL6, since the 2^{nd} bit of the monitoring bit map M_BM is "0" and the repetition number is three. The communication device disables performing the monitoring in the slot SL3, since the slot SL3 is the SBFD slots. The communication device disables performing the monitoring in the slots SL7-SL8, since the slots SL7-SL8 do not correspond to the monitoring bit map M_BM.

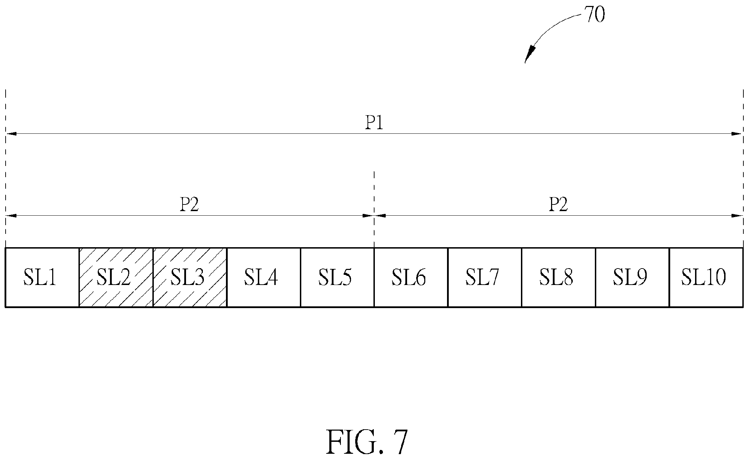

FIG. 7 is a schematic diagram of a monitoring 70 according to an example of the present invention. The communication device is configured with a periodicity P1 for configuring slot type of slots SL1-SL10. The periodicity P1 is ten slots. In every ten slots, the first five slots (e.g., the slots SL1-SL5) are configured according to one pattern, and the last five slots (e.g., the slots SL6-SL10) are configured according to the other pattern. The slots SL2-SL3 are configured as SBFD slots which are shown as slash blocks. The communication device receives a configuration comprising a periodicity P2 for the monitoring and a duration. The periodicity P2 is five slots. The duration indicates a number of slots to perform the monitoring, and is two.

In FIG. 7, the communication device performs the monitoring in the slot SL1, since the slot SL1 is not the SBFD slot. Then, the communication device disables performing the monitoring in the slots SL2-SL3, since the slots SL2-SL3 are the SBFD slots. The communication device performs the monitoring in the slot SL4, since the slot SL4 is not the SBFD slot. Finally, the communication device disables performing the monitoring in the slots SL5-SL10, since the duration is two and the monitoring has been performed in the slots SL1 and SL4.

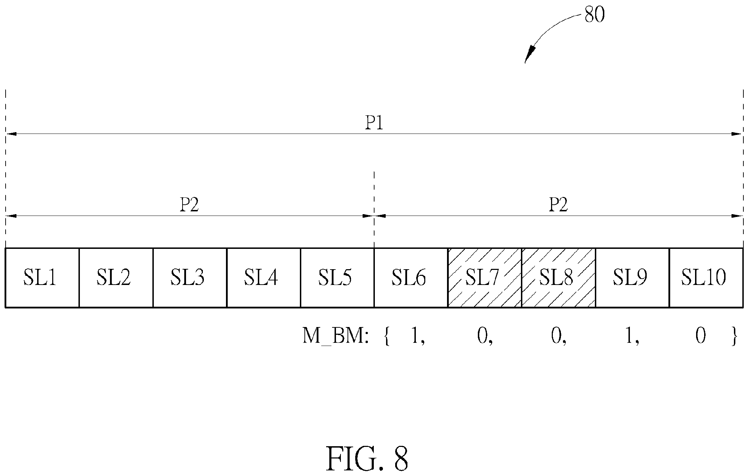

FIG. 8 is a schematic diagram of a monitoring 80 according to an example of the present invention. The communication device is configured with a periodicity P1 for configuring slot type of slots SL1-SL10. The periodicity P1 is ten slots. In every ten slots, the first five slots (e.g., the slots SL1-SL5) are configured according to one pattern, and the last five slots (e.g., the slots SL6-SL10) are configured according to the other pattern. The slots SL7-SL8 are configured as SBFD slots which are shown as slash blocks. The communication device receives a configuration comprising a periodicity P2 for the monitoring, a monitoring bit map M_BM and a duration. The periodicity P2 is five slots. The duration indicates a number of slots to perform the monitoring, and is two. The monitoring bit map M_BM is {1, 0, 0, 1, 0}.

In FIG. 8, the communication device performs the monitoring in the 1^{st} periodicity P2 (e.g., the slots SL1-SL5) according to the duration, since there is no SBFD slot in the 1^{st} periodicity P2. In detail, the communication device performs the monitoring in the slots SL1-SL2, since the slots SL1-SL2 are not SBFD slots. The communication device disables performing the monitoring in the slots SL3-SLS, since the duration is two and the monitoring has been performed in the slots SL1-SL2.

In FIG. 8, the communication device performs the monitoring in the 2^{nd} periodicity P2 (e.g., the slots SL6-SL10) according to the monitoring bit map M_BM, since there are SBFD slots in the 2^{nd} periodicity P2. In detail, the communication device performs the monitoring in the slots SL6 and SL9, since the 1^{st} bit and the 4^{th} bit of the monitoring bit map M_BM are "1". The communication device disables performing the monitoring in the slots SL7, SL8 and SL10, since the 2^{nd} bit, the 3^{rd} bit and the 5^{th} bit of the monitoring bit map M_BM are "0".

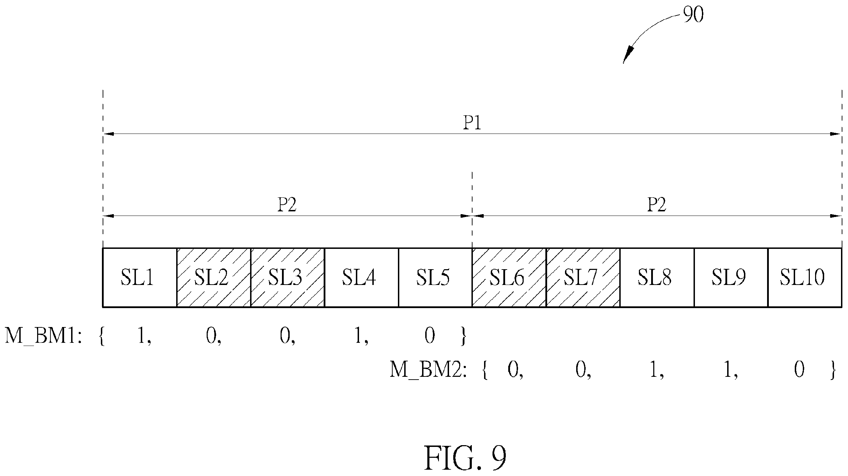

FIG. 9 is a schematic diagram of a monitoring 90 according to an example of the present invention. The communication device is configured with a periodicity P1 for configuring slot type of slots SL1-SL10. The periodicity P1 is ten slots. In every ten slots, the first five slots (e.g., the slots SL1-SL5) are configured according to one pattern, and the last five slots (e.g., the slots SL6-SL10) are configured according to the other pattern. The slots SL2-SL3 and SL6-SL7 are configured as SBFD slots which are shown as slash blocks. The communication device receives a configuration comprising a periodicity P2 for the monitoring and monitoring bit maps M_BM1-M_BM2. The periodicity P2 is five slots. The monitoring bit map M_BM1 is {1, 0, 0, 1, 0} for odd periodicity P2. The monitoring bit map M_BM2 is {0, 0, 1, 1, 0} for even periodicity P2.

In FIG. 9, the communication device performs the monitoring in the 1^{st} periodicity P2 (e.g., the slots SL1-SL5) according to the monitoring bit map M_BM1. In detail, the communication device performs the monitoring in the slots SL1 and SL4, since the 1^{st} bit and the 4^{th} bit of the monitoring bit map M_BM1 are "1". The communication device disables performing the monitoring in the slots SL2, SL3 and SLS, since the 2^{nd} bit, the 3^{rd} bit and the 5^{th} bit of the monitoring bit map M_BM1 are "0".

In FIG. 9, the communication device performs the monitoring in the 2^{nd} periodicity P2 (e.g., the slots SL6-SL10) according to the monitoring bit map M_BM2. In detail, the communication device performs the monitoring in the slots SL8-SL9, since the 3^{rd} bit and the 4^{th} bit of the monitoring bit map M_BM2 are "1". The communication device disables performing the monitoring in the slots SL6, SL7 and SL10, since the 1^{st} bit, the 2^{nd} bit and the 5^{th} bit of the monitoring bit map M_BM2 are "0".

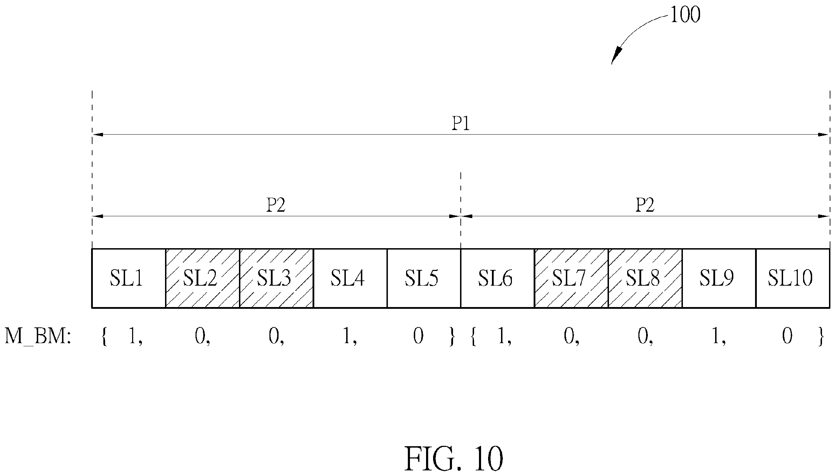

FIG. 10 is a schematic diagram of a monitoring 100 according to an example of the present invention. The communication device is configured with a periodicity P1 for configuring slot type of slots SL1-SL10. The periodicity P1 is ten slots. In every ten slots, the first five slots (e.g., the slots SL1-SL5) and the last five slots (e.g., the slots SL6-SL10) are configured according to the same pattern. The slots SL2-SL3 and SL7-SL8 are configured as SBFD slots which are shown as slash blocks. The communication device receives a configuration comprising a periodicity P2 for the monitoring, a monitoring bit map M_BM and a duration. The periodicity P2 is five slots. The duration is two. The monitoring bit map M_BM is {1, 0, 0, 1, 0} corresponding to the slots SL1-SL5, and further corresponds to the slots SL6-SL10 in response to the duration.

In FIG. 10, the communication device performs the monitoring in the slots SL1, SL4, SL6 and SL 9, since the 1^{st} bit and the 4^{th} bit of the monitoring bit map M_BM are "1" and the duration is two. The communication device disables performing the monitoring in the slots SL2, SL3, SLS, SL7, SL8 and SL10, since the 2^{nd} bit, the 3^{rd} bit and the 5^{th} bit of the monitoring bit map M_BM are "0" and the duration is two.

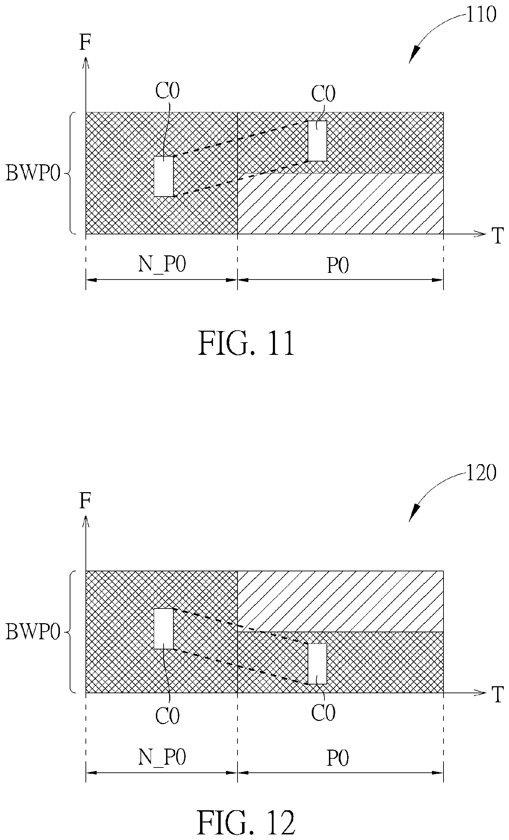

FIG. 11 is a schematic diagram of a CORSET resource determination 110 according to an example of the present invention. In FIG. 11, a horizontal axis represents a time domain T, and a vertical axis represents a frequency domain F. The communication device is configured with a BWP BWP0 for performing communication operations, and is further configured with time periods N_P0 and P0. The time period N_P0 only overlaps with a DL subband, i.e., there is no SBFD slot in the time period N_P0. The time period P0 overlaps with a DL subband and a UL subband simultaneously, i.e., there are SBFD slots in the time period P0. The DL subband is shown as a mesh block, and the UL subband is shown as a slash block.

In one example of FIG. 11, the communication device receives a configuration comprising resource bit maps R_BM1-R_BM2. Each bit of the resource bit maps R_BM1-R_BM2 corresponds to a frequency part of the BWP. The resource bit map R_BM1 indicates a CORSET resource C0 in the time period N_P0, and is {0, 0, 0, 1, 1, 1, 1, 0, 0, 0}. The resource bit map R_BM2 indicates the CORSET resource C0 in the time period P0, and is {0, 0, 0, 0, 0, 1, 1, 1, 1, 0}.

In one example of FIG. 11, the communication device receives a configuration comprising the resource bit map R_BM1 and an offset. The resource bit map R_BM1 is {0, 0, 0, 1, 1, 1, 1, 0, 0, 0}. The offset indicates a bit offset for the resource bit map R_BM1 and the shift direction for the bit offset, and is "+2". "2" represents that the bits of the resource bit map R_BM1 are shifted by two bits. "+" represents that the bits of the resource bit map R_BM1 are circularly shifted from left to right. Thus, the communication device obtains the resource bit map R_BM2 {0, 0, 0, 0, 0, 1, 1, 1, 1, 0} according to the resource bit map R_BM1 and the offset.

FIG. 12 is a schematic diagram of a CORSET resource determination 120 according to an example of the present invention. In FIG. 12, a horizontal axis represents a time domain T, and a vertical axis represents a frequency domain F. The communication device is configured with a BWP BWP0 for performing communication operations, and is further configured with time periods N_P0 and P0. The time period N_P0 only overlaps with a DL subband, i.e., there is no SBFD slot in the time period N_P0. The time period P0 overlaps with a DL subband and a UL subband simultaneously, i.e., there are SBFD slots in the time period P0. The DL subband is shown as a mesh block, and the UL subband is shown as a slash block.

In one example of FIG. 12, the communication device receives a configuration comprising resource bit maps R_BM1-R_BM2. Each bit of the resource bit maps R_BM1-R_BM2 corresponds to a frequency part of the BWP. The resource bit map R_BM1 indicates a CORSET resource C0 in the time period N_P0, and is {0, 0, 0, 1, 1, 1, 1, 0, 0, 0}. The resource bit map R_BM2 indicates the CORSET resource C0 in the time period P0, and is {0, 1, 1, 1, 1, 0, 0, 0, 0, 0}.

In one example of FIG. 12, the communication device receives a configuration comprising the resource bit map R_BM1 and an offset. The resource bit map R_BM1 is {0, 0, 0, 1, 1, 1, 1, 0, 0, 0}. The offset indicates a bit offset for the resource bit map R_BM1 and the shift direction for the bit offset, and is "-2". "2" represents that the bits of the resource bit map R_BM1 are shifted by two bits. "-" represents that the bits of the resource bit map R_BM1 are circularly shifted from right to left. Thus, the communication device obtains the resource bit map R_BM2 {0, 1, 1, 1, 1, 0, 0, 0, 0, 0} according to the resource bit map R_BM1 and the offset.

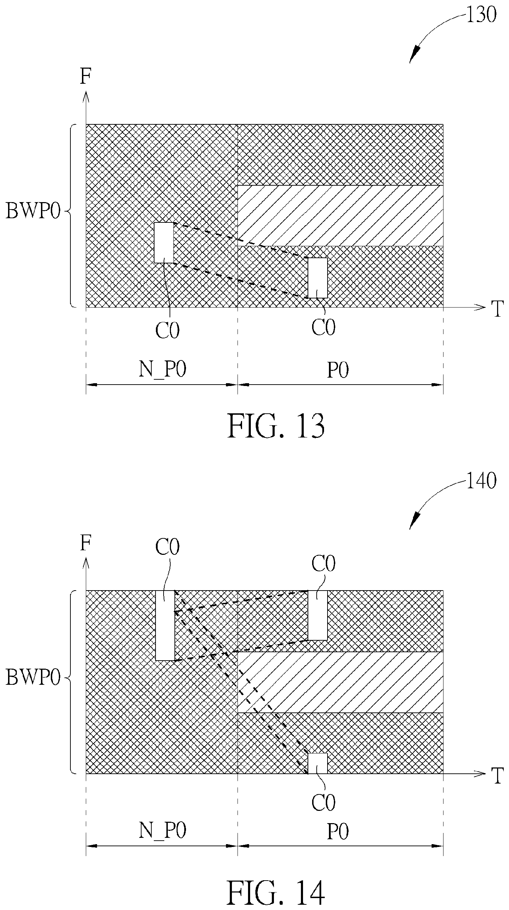

FIG. 13 is a schematic diagram of a CORSET resource determination 130 according to an example of the present invention. In FIG. 13, a horizontal axis represents a time domain T, and a vertical axis represents a frequency domain F. The communication device is configured with a BWP BWP0 for performing communication operations, and is further configured with time periods N_P0 and P0. The time period N_P0 only overlaps with a DL subband, i.e., there is no SBFD slot in the time period N_P0. The time period P0 overlaps with two DL subbands and a UL subband simultaneously, i.e., there are SBFD slots in the time period P0. The DL subband is shown as a mesh block, and the UL subband is shown as a slash block.

In one example of FIG. 13, the communication device receives a configuration comprising the resource bit map R_BM1, an offset and a direction indicator. Each bit of the resource bit map R_BM1 corresponds to a frequency part of the BWP. The resource bit map R_BM1 indicates a CORSET resource C0 in the time period N_P0, and is {0, 0, 0, 1, 1, 1, 1, 0, 0, 0}. The offset is "2" which represents that the bits of the resource bit map R_BM1 are shifted by two bits. The direction indicator is "0" which represents that the bits of the resource bit map R_BM1 are circularly shifted from right to left. Thus, the communication device obtains a resource bit map R_BM2 {0, 1, 1, 1, 1, 0, 0, 0, 0, 0} according to the resource bit map R_BM1, the offset and the direction indicator. The resource bit map R_BM2 indicates the CORSET resource C0 in the time period P0.

In one example of FIG. 13, the communication device receives a configuration comprising the resource bit map R_BM1 and an adaptation indicator. The resource bit map R_BM1 is {0, 0, 0, 1, 1, 1, 1, 0, 0, 0}. The adaptation indicator is "010". The 1^{st} bit "0" of the adaptation indicator represents that the bits of the resource bit map R_BM1 are circularly shifted from right to left. The remaining bits "10" of the adaptation indicator represent that the bits of the resource bit map R_BM1 are shifted by two bits. Thus, the communication device obtains the resource bit map R_BM2 {0, 1, 1, 1, 1, 0, 0, 0, 0, 0} according to the resource bit map R_BM1 and the adaptation indicator.

FIG. 14 is a schematic diagram of a CORSET resource determination 140 according to an example of the present invention. In FIG. 14, a horizontal axis represents a time domain T, and a vertical axis represents a frequency domain F. The communication device is configured with a BWP BWP0 for performing communication operations, and is further configured with time periods N_P0 and P0. The time period N_P0 only overlaps with a DL subband, i.e., there is no SBFD slot in the time period N_P0. The time period P0 overlaps with two DL subbands and a UL subband simultaneously, i.e., there are SBFD slots in the time period P0. The DL subband is shown as a mesh block, and the UL subband is shown as a slash block.

In FIG. 14, the communication device receives a configuration comprising the resource bit map R_BM1 and an offset. Each bit of the resource bit map R_BM1 corresponds to a frequency part of the BWP. The resource bit map R_BM1 indicates a CORSET resource C0 in the time period N_P0, and is {0, 0, 0, 1, 1, 1, 1, 1, 1, 1}. The offset indicates a bit offset for the resource bit map R_BM1 and the shift direction for the bit offset, and is "+2". "2" represents that the bits of the resource bit map R_BM1 are shifted by two bits. "+" represents that the bits of the resource bit map R_BM1 are circularly shifted from left to right. Thus, the communication device obtains a resource bit map R_BM2 {1, 1, 0, 0, 0, 1, 1, 1, 1, 1} according to the resource bit map R_BM1 and the offset. The resource bit map R_BM2 indicates the CORSET resource C0 in the time period P0.

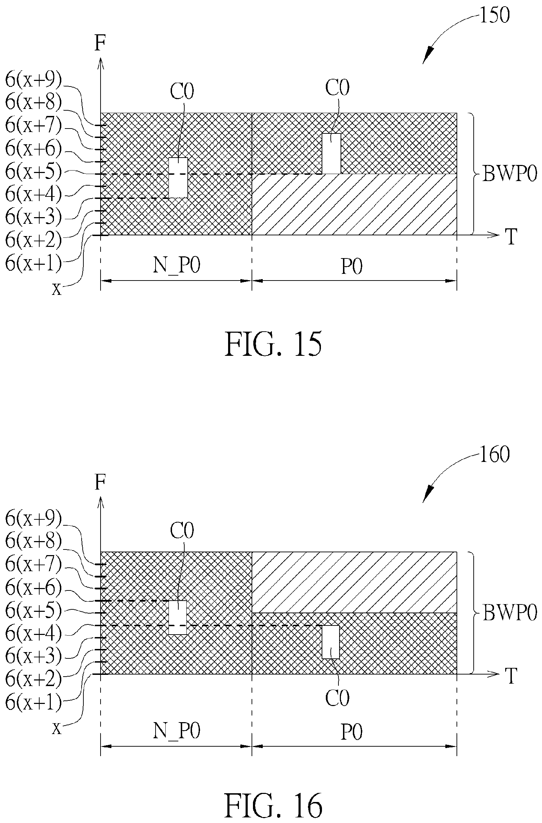

FIG. 15 is a schematic diagram of a CORSET resource determination 150 according to an example of the present invention. In FIG. 15, a horizontal axis represents a time domain T, and a vertical axis represents RB indexes "6x"-"6(x+9)+5" in a frequency domain F. The communication device is configured with a BWP BWP0 for performing communication operations, and is further configured with time periods N_P0 and P0. The time period N_P0 only overlaps with a DL subband, i.e., there is no SBFD slot in the time period N_P0. The time period P0 overlaps with a DL subband and a UL subband simultaneously, i.e., there are SBFD slots in the time period P0. The DL subband is shown as a mesh block, and the UL subband is shown as a slash block.

In FIG. 15, the communication device receives a configuration comprising a resource bit map R_BM1. The resource bit map R_BM1 indicates a CORSET resource C0 in the time period N_P0, and is {0, 0, 0, 1, 1, 1, 1, 0, 0, 0}. Each bit of the resource bit map R_BM1 corresponds to six RBs. The 1^{st} bit of the resource bit map R_BM1 corresponds to the RBs "6x"-"6x+5", the 2^{nd} bit of the resource bit map R_BM1 corresponds to the RBs "6(x+1)"-"6(x+1)+5", and so on. The communication device selects the 4^{th} bit and the 6^{th} bit of the resource bit map R_BM1 to determine a bit offset. In detail, the 4^{th} bit of the resource bit map R_BM1 is the 1^{st} bit which is "1" in the resource bit map R_BM1. The 6^{th} bit of the resource bit map R_BM1 is the 1^{st} bit that the RBs "6(x+5)"-"6(x+5)+5" overlap with the DL subband. Since 6 - 4 = 2, the communication device circularly shifts the resource bit map R_BM1 by two bit from left to right in order to obtain a resource bit map R_BM2 {0, 0, 0, 0, 0, 1, 1, 1, 1, 0}. The resource bit map R_BM2 indicates the CORSET resource C0 in the time period P0.

FIG. 16 is a schematic diagram of a CORSET resource determination 160 according to an example of the present invention. In FIG. 16, a horizontal axis represents a time domain T, and a vertical axis represents RB indexes "6x"-"6(x+9)+5" in a frequency domain F. The communication device is configured with a BWP BWP0 for performing communication operations, and is further configured with time periods N_P0 and P0. The time period N_P0 only overlaps with a DL subband, i.e., there is no SBFD slot in the time period N_P0. The time period P0 overlaps with a DL subband and a UL subband simultaneously, i.e., there are SBFD slots in the time period P0. The DL subband is shown as a mesh block, and the UL subband is shown as a slash block.

In FIG. 16, the communication device receives a configuration comprising a resource bit map R_BM1. The resource bit map R_BM1 indicates a CORSET resource C0 in the time period N_P0, and is {0, 0, 0, 0, 1, 1, 1, 1, 0, 0}. Each bit of the resource bit map R_BM1 corresponds to six RBs. The 1^{st} bit of the resource bit map R_BM1 corresponds to the RBs "6x"-"6x+5", the 2^{nd} bit of the resource bit map R_BM1 corresponds to the RBs "6(x+1)"-"6(x+1)+5", and so on. The communication device selects the 8^{th} bit and the 5^{th} bit of the resource bit map R_BM1 to determine a bit offset. In detail, the 8^{th} bit of the resource bit map R_BM1 is the last bit which is "1" in the resource bit map R_BM1. The 5^{th} bit of the resource bit map R_BM1 is the 1^{st} bit that the RBs "6(x+4)"-"6(x+4)+5" overlap with the DL subband. Since 8 - 5 = 3, the communication device circularly shifts the resource bit map R_BM1 by two bit from right to left in order to obtain a resource bit map R_BM2 {0, 1, 1, 1, 1, 0, 0, 0, 0, 0}. The resource bit map R_BM2 indicates the CORSET resource C0 in the time period P0.

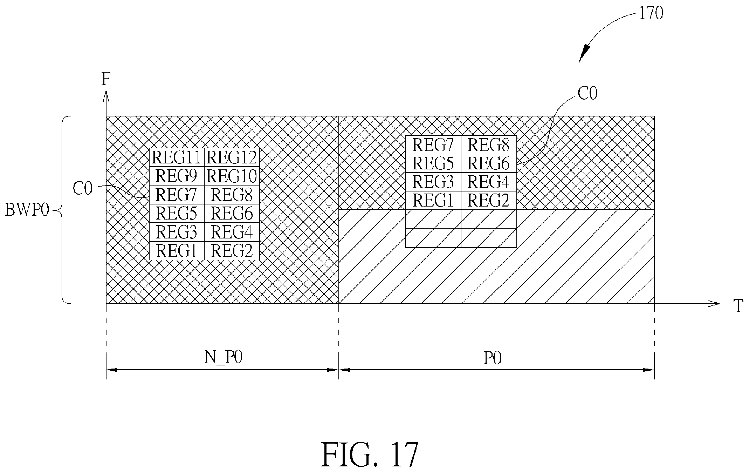

FIG. 17 is a schematic diagram of a CORSET resource determination 170 according to an example of the present invention. In FIG. 17, a horizontal axis represents a time domain T, and a vertical axis represents a frequency domain F. The communication device is configured with a BWP BWP0 for performing communication operations, and is further configured with time periods N_P0 and P0. The time period N_P0 only overlaps with a DL subband, i.e., there is no SBFD slot in the time period N_P0. The time period P0 overlaps with a DL subband and a UL subband simultaneously, i.e., there are SBFD slots in the time period P0. The DL subband is shown as a mesh block, and the UL subband is shown as a slash block.

In FIG. 17, the communication device divides a CORSET resource C0 into twelve REGs. In one example of FIG. 17, since all REGs of the CORSET resource C0 overlap with the DL subband in the time period N_P0, the communication device numbers the twelve REGs as REG0-REG12 and performs the monitoring via the REGs REG0-REG12 in the time period N_P0. In one example of FIG. 17, since some REGs (e.g., the four lowest REGs) of the CORSET resource C0 overlap with the UL subband in the time period P0, the communication device ignores the four lowest REGs and numbers remaining REGs which overlap with the DL subband as REG0-REG8. Then, since a number of the REGs REG0-REG8 is not a multiple of six, communication device performs the monitoring via six REGs of the REGs REG0-REG8 in the time period P0.

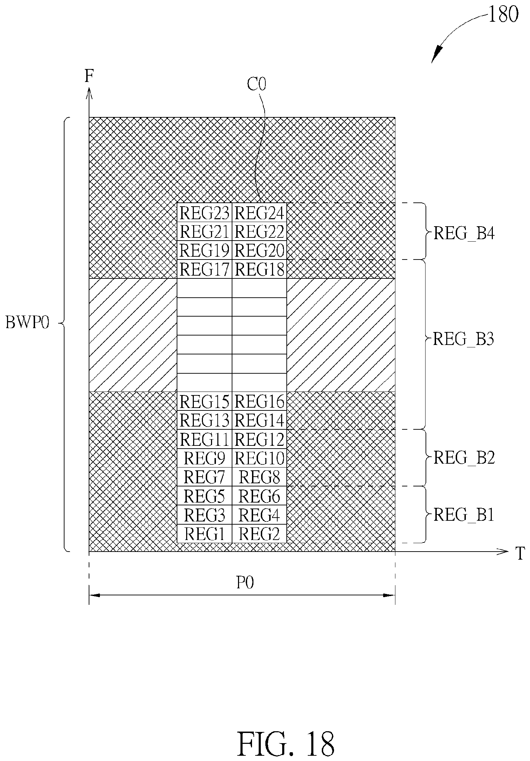

FIG. 18 is a schematic diagram of a CORSET resource determination 180 according to an example of the present invention. In FIG. 18, a horizontal axis represents a time domain T, and a vertical axis represents a frequency domain F. The communication device is configured with a BWP BWP0 for performing communication operations, and is further configured with a time period P0. The time period P0 overlaps with two DL subbands and a UL subband simultaneously, i.e., there are SBFD slots in the time period P0. The DL subband is shown as a mesh block, and the UL subband is shown as a slash block.

In FIG. 18, the communication device divides a CORSET resource C0 into thirty-six REGs. The communication device ignores some REGs which overlap with the UL subband, and numbers remaining REGs which overlap with the DL subband as REG1-REG24. Every six numbered REGs are group into a REG bundle. The REGs REG1-REG6 are group into a REG bundle REG_B1, the REGs REG7-REG12 are group into a REG bundle REG_B2, and so on. Accordingly, for the REG bundles REG_B1, REG_B2 and REG_B4, the communication device performs a channel estimation per the REG bundle. For the REG bundle REG_B3, since the REGs REG13-REG18 are non-consecutive REGs, the communication device performs one channel estimation in the REGs REG13-REG16 and performs the other channel estimation in the REGs REG17-REG18.

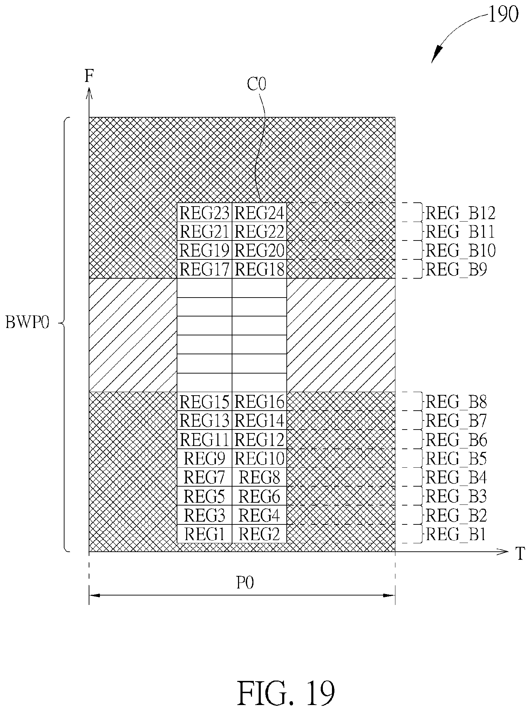

FIG. 19 is a schematic diagram of a CORSET resource determination 190 according to an example of the present invention. In FIG. 19, a horizontal axis represents a time domain T, and a vertical axis represents a frequency domain F. The communication device is configured with a BWP BWP0 for performing communication operations, and is further configured with a time period P0. The time period P0 overlaps with two DL subbands and a UL subband simultaneously, i.e., there are SBFD slots in the time period P0. The DL subband is shown as a mesh block, and the UL subband is shown as a slash block.

In FIG. 19, the communication device divides a CORSET resource C0 into thirty-six REGs. The communication device ignores some REGs which overlap with the UL subband, and numbers remaining REGs which overlap with the DL subband as REG1-REG24. Every two numbered REGs are group into a REG bundle. The REGs REG1-REG2 are group into a REG bundle REG_B1, the REGs REG3-REG4 are group into a REG bundle REG_B2, and so on. Accordingly, for the REG bundles REG_B1-REG_B12, the communication device performs a channel estimation per the REG bundle.

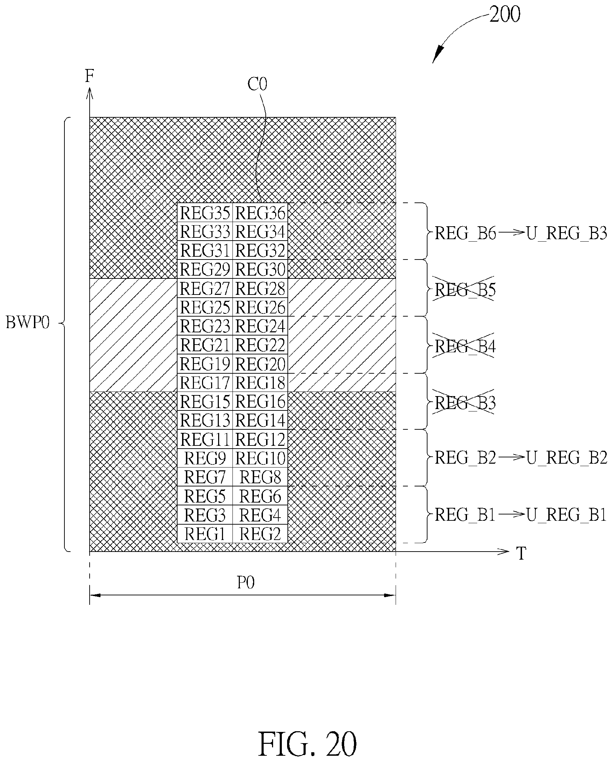

FIG. 20 is a schematic diagram of a CORSET resource determination 200 according to an example of the present invention. In FIG. 20, a horizontal axis represents a time domain T, and a vertical axis represents a frequency domain F. The communication device is configured with a BWP BWP0 for performing communication operations, and is further configured with a time period P0. The time period P0 overlaps with two DL subbands and a UL subband simultaneously, i.e., there are SBFD slots in the time period P0. The DL subband is shown as a mesh block, and the UL subband is shown as a slash block.

In FIG. 20, the communication device divides a CORSET resource C0 into thirty-six REGs, and numbers all REGs as REG1-REG36. Every six numbered REGs are group into a REG bundle. The REGs REG1-REG6 are group into a REG bundle REG_B1, the REGs REG7-REG12 are group into a REG bundle REG_B2, and so on. The communication device determines that the REG bundles REG_B1, REG_B2 and REG_B6 are valid, since the REG bundles REG_B1, REG_B2 and REG_B6 completely overlap with the DL subband. The communication device determines that the REG bundles REG_B3-REG_B5 are invalid, since the REG bundles REG_B3-REG_B5 completely or partially overlap with the UL subband. Accordingly, the communication device renumbers the valid REG bundles REG_B1, REG_B2 and REG_B6 as the REG bundles U_REG_B1-U_REG_B3. For the REG bundles U_REG_B1-U_REG_B3, the communication device performs a channel estimation per the REG bundle. It should be noted that the terms of "REG bundles REG_B1-REG_B6" and "REG bundles U_REG-B1-U_REG_B3" in FIG. 20 can be replace by the terms of "CCEs CCE0-CCE6" and "CCEs U_CCE0-U_CCE6", respectively.

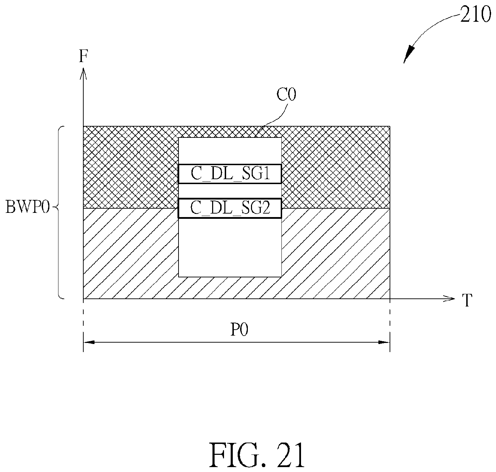

FIG. 21 is a schematic diagram of a candidate DL signal reception 210 according to an example of the present invention. In FIG. 21, a horizontal axis represents a time domain T, and a vertical axis represents a frequency domain F. The communication device is configured with a BWP BWPO for performing communication operations, and is further configured with a time period P0. The time period P0 overlaps with a DL subband and a UL subband simultaneously, i.e., there are SBFD slots in the time period P0. The DL subband is shown as a mesh block, and the UL subband is shown as a slash block. A CORSET resource C0 comprises two candidate DL signals C_DL_SG1- C_DL_SG2 for a periodic DL signal. The candidate DL signals C_DL_SG1- C_DL_SG2 are associated with different SSs with a same link ID.

In FIG. 21, the communication device receives the candidate DL signal C_DL_SG1 from a network, since the candidate DL signal C_DL_SG1 overlaps with the DL subband. In one example of FIG. 21, the communication device disables receiving the candidate DL signal C_DL_SG2 from the network, since the candidate DL signal C_DL_SG2 partially overlaps with the UL subband. In one example of FIG. 21, the communication device disables receiving the candidate DL signal C_DL_SG2 from the network, since a code rate of the candidate DL signal C_DL_SG2 is greater than a preconfigured code rate. In one example of FIG. 21, the communication device receives the candidate DL signal C_DL_SG2 from the network, since the code rate of the candidate DL signal C_DL_SG2 is not greater than the preconfigured code rate.

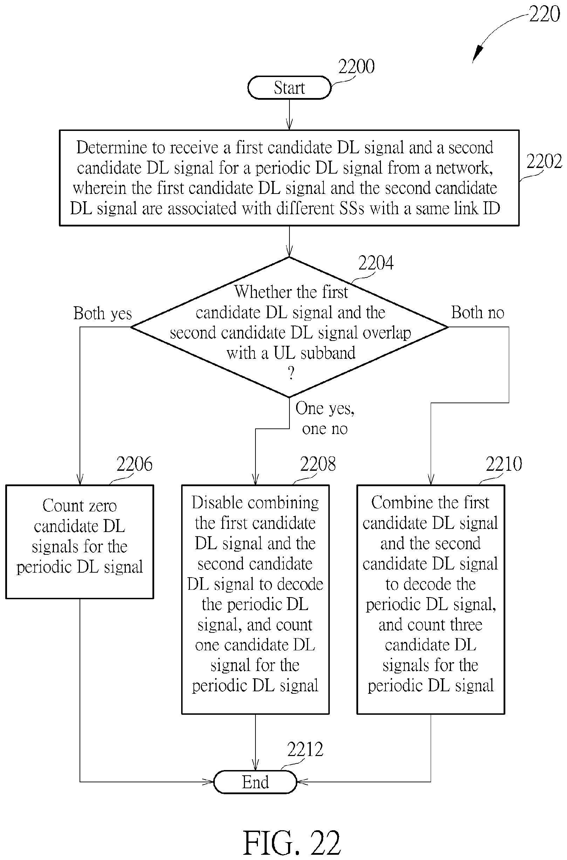

FIG. 22 is a flowchart of a process 220 according to an example of the present invention. The process 220 may be utilized in a communication device (e.g., a communication device 14 in FIG. 1 or the communication device 20 in FIG. 2), to count a number of candidate DL signals for a periodic DL signal. The process 220 may be compiled into the program codes 214 and includes the following steps:

| | |
|---|---|
| Step 2200: | Start. |
| Step 2202: | Determine to receive a first candidate DL signal and a second candidate DL signal for a periodic DL signal from a network, wherein the first candidate DL signal and the second candidate DL signal are associated with different SSs with a same link ID. |
| Step 2204: | Whether the first candidate DL signal (e.g., completely or partially) overlaps with a UL subband? Whether the second candidate DL signal (e.g., completely or partially) overlaps with the UL subband? If both yes, perform Step 2206. If one is yes and the other one is no, perform Step 2208. If both no, perform Step 2210. |
| Step 2206: | Count zero candidate DL signals for the periodic DL signal, and perform Step 2212. |
| Step 2208: | Disable combining the first candidate DL signal and the second candidate DL signal to decode the periodic DL signal, count one candidate DL signal for the periodic DL signal, and perform Step 2212. |
| Step 2210: | Combine the first candidate DL signal and the second candidate DL signal to decode the periodic DL signal, and count three candidate DL signals for the periodic DL signal. |
| Step 2212: | End. |

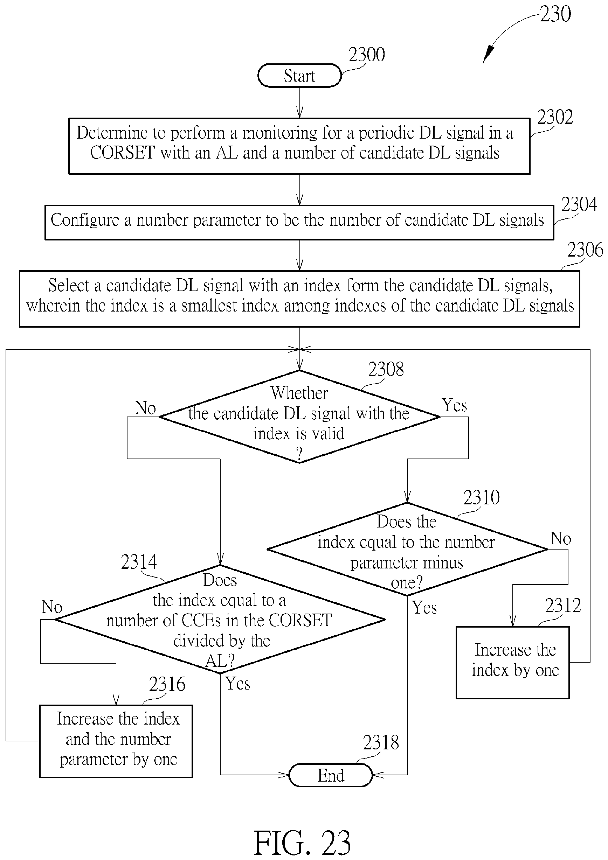

FIG. 23 is a flowchart of a process 230 according to an example of the present invention. The process 230 may be utilized in a communication device (e.g., a communication device 14 in FIG. 1 or the communication device 20 in FIG. 2), to determine validity of candidate DL signals for a periodic DL signal. The process 230 may be compiled into the program codes 214 and includes the following steps:

| | |
|---|---|
| Step 2300: | Start. |
| Step 2302: | Determine to perform a monitoring for a periodic DL signal in a CORSET with an AL and a number of candidate DL signals. |
| Step 2304: | Configure a number parameter to be the number of candidate DL signals. |
| Step 2306: | Select a candidate DL signal with an index form the candidate DL signals, wherein the index is a smallest index among indexes of the candidate DL signals. |

| | |
|---|---|
| Step 2308: | Whether the candidate DL signal with the index is valid? If yes, perform Step 2310. If no, perform Step 2314. |
| Step 2310: | Does the index equal to the number parameter minus one? If yes, perform Step 2318. If no, perform Step 2312. |
| Step 2312: | Increase the index by one, and perform Step 2308. |
| Step 2314: | Does the index equal to a number of CCEs in the CORSET divided by the AL? If yes, perform Step 2318. If no, perform Step 2316. |
| Step 2316: | Increase the index and the number parameter by one, and perform Step 2308. |
| Step 2318: | End. |

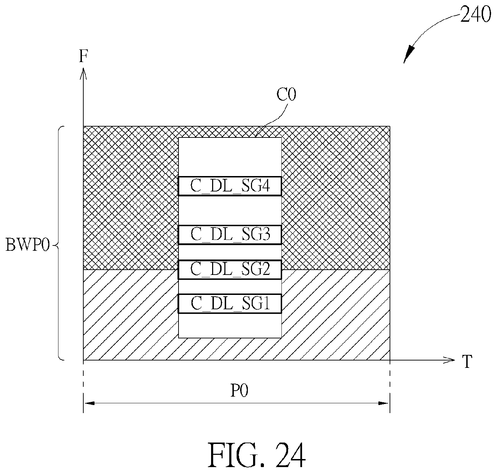

FIG. 24 is a schematic diagram of a candidate DL signal reception 240 according to an example of the present invention. In FIG. 24, a horizontal axis represents a time domain T, and a vertical axis represents a frequency domain F. The communication device is configured with a BWP BWP0 for performing communication operations, and is further configured with a time period P0. The time period P0 overlaps with a DL subband and a UL subband simultaneously, i.e., there are SBFD slots in the time period P0. The DL subband is shown as a mesh block, and the UL subband is shown as a slash block. A CORSET resource C0 comprises four candidate DL signals C_DL_SG1- C_DL_SG4 for a periodic DL signal. The communication device receives a DCI format 2_0 from a network, and is configured to receive one candidate DL signal for the periodic DL signal according to the DCI format 2_0.

In one example of FIG. 24, the communication device disables receiving the candidate DL signals C_DL_SG1-C_DL_SG2 from the network, since the candidate DL signals C_DL_SG1-C_DL_SG2 completely or partially overlaps with the UL subband. The communication device receives the candidate DL signal C_DL_SG3 from the network, since the candidate DL signal C_DL_SG3 does not overlap with the UL subband. The communication device disables receiving the candidate DL signal C_DL_SG4 from the network, since the communication device has receives one candidate DL signal (i.e., the candidate DL signal C_DL_SG3) from the network.

In one example of FIG. 24, the communication device disables receiving the candidate DL signal C_DL_SG1 from the network, since the candidate DL signal C_DL_SG1 completely overlaps with the UL subband. The communication device receives the candidate DL signal C_DL_SG2 from the network, since a code rate of the candidate DL signal C_DL_SG2 is not greater than a preconfigured code rate. The communication device disables receiving the candidate DL signals C_DL_SG3-C_DL_SG4 from the network, since the communication device has receives one candidate DL signal (i.e., the candidate DL signal C_DL_SG2) from the network.

In one example of FIG. 24, the communication device disables receiving the candidate DL signal C_DL_SG1 from the network, since the candidate DL signal C_DL_SG1 completely overlaps with the UL subband. The communication device disables receiving the candidate DL signal C_DL_SG2 from the network, since the code rate of the candidate DL signal C_DL_SG2 is greater than a preconfigured code rate. The communication device receives the candidate DL signal C_DL_SG3 from the network, since the candidate DL signal C_DL_SG3 does not overlap with the UL subband. The communication device disables receiving the candidate DL signal C_DL_SG4 from the network, since the communication device has receives one candidate DL signal (i.e., the candidate DL signal C_DL_SG3) from the network.

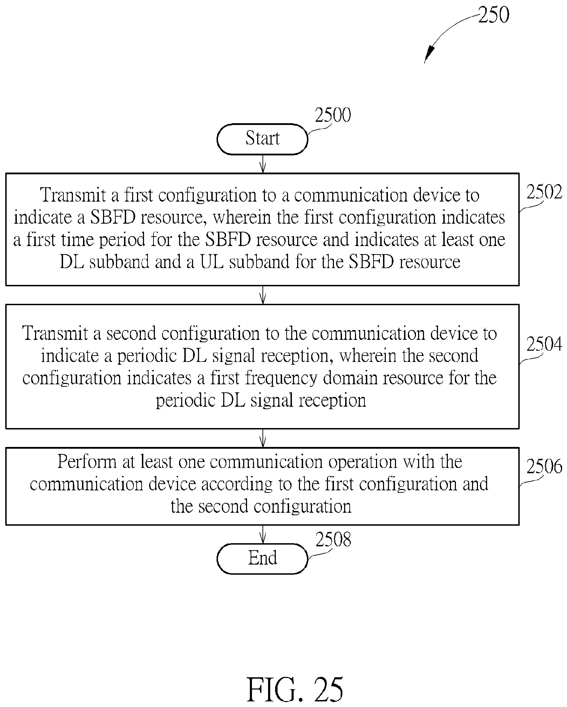

FIG. 25 is a flowchart of a process 250 according to an example of the present invention. The process 250 may be utilized in a communication device (e.g., a network 12 in FIG. 1 or the communication device 20 in FIG. 2), to configure a DL signal reception. The process 250 may be compiled into the program codes 214 and includes the following steps:

| | |
|---|---|
| Step 2500: | Start. |
| Step 2502: | Transmit a first configuration to a communication device to indicate a SBFD resource, wherein the first configuration indicates a first time period for the SBFD resource and indicates at least one DL subband and a UL subband for the SBFD resource. |
| Step 2504: | Transmit a second configuration to the communication device to indicate a periodic DL signal reception, wherein the second configuration indicates a first frequency domain resource for the periodic DL signal reception. |
| Step 2506: | Perform at least one communication operation with the communication device according to the first configuration and the second configuration. |
| Step 2508: | End. |

According to the process 250, the network transmits a first configuration to a communication device to indicate a SBFD resource. The first configuration indicates a first time period for the SBFD resource and indicates at least one DL subband and a UL subband for the SBFD resource. The network transmits a second configuration to the communication device to indicate a periodic DL signal reception. The second configuration indicates a first frequency domain resource for the periodic DL signal reception. Then, the network performs at least one communication operation with the communication device according to the first configuration and the second configuration. In one example, the communication device may perform (e.g., monitor) the periodic DL signal reception in the first time period and the first frequency domain resource.

Realization of the process 250 is not limited to the above description. The following examples may be applied to realize the process 250.

In one example, the network transmits a third configuration to the communication device to indicate at least one pattern. In one example, the network transmits a fourth configuration to the communication device to indicate a BWP configuration. In one example, the network performs the at least one communication operation with the communication device according to the first configuration, the second configuration and the third configuration.

In one example, the network transmits a fifth configuration to the communication device. In one example, the fifth configuration comprises at least one of a first slot parameter, at least one monitoring bit map, a repetition number, a duration and at least one CORESET ID. In one example, the network transmits a sixth configuration to the communication device to indicate a preconfigured code rate.

The examples in the process 30 may be applied to the process 250, and are not narrated herein for brevity.

The operation of "determine" described above may be replaced by the operation of "compute", "calculate", "obtain", "generate", "output, "use", "choose/select", "decide" or "is configured to". The phrase of "according to" described above may be replaced by "in response to". The term of "via" described above may be replaced by "on", "in" or "at". The term of "when", "if' or "since" described above may be replaced by "in response to".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present invention provide methods and a communication device for handling a DL signal reception. The communication device may avoid utilizing the SBFD resource according to the monitoring bit map(s), the repetition number and/or the duration, to perform the DL signal reception normally. The communication device may shift the frequency domain resource according to the resource bit map(s), to avoid performing the DL signal reception in the UL subband of the SBFD resource. The communication device may avoid utilizing the invalid resource (e.g., RB, REG, REG bundle and/or CCE) in the SBFD resource, and may perform the DL signal reception in the valid resource (e.g., RB, REG, REG bundle and/or CCE) in the SBFD resource. Thus, the problem of handling a DL signal reception can be solved.

## Claims

1. A method for a communication device (14) handling a downlink, DL, signal reception, **characterized by:**
receiving a first configuration from a network to indicate a subband non-overlapping full duplex, SBFD, resource, wherein the first configuration indicates a time period for the SBFD resource and indicates at least one DL subband and a UL subband for the SBFD resource (302);
receiving a second configuration from the network to indicate a periodic DL signal reception, wherein the second configuration indicates a first frequency domain resource for the periodic DL signal reception (304);
receiving a third configuration from the network to indicate a bandwidth part (BWP) configuration; and
performing at least one communication operation with the network according to the first configuration, the second configuration and the third configuration.

2. The method of claim 1, **characterized in that** the method further comprises:
determining a first resource block, RB, of the first frequency domain resource to be valid in response to the first RB overlapping with the at least one DL subband.

3. The method of claim 1, **characterized in that** the method further comprises:
determining a second RB of the first frequency domain resource to be invalid in response to the second RB overlapping with the UL subband.

4. The method of claim 1, **characterized in that** the method further comprises:
determining the first frequency domain resource according to a bit map;
wherein each bit of the bit map represents a first plurality of RBs.

5. The method of claim 4, **characterized in that** the method further comprises:
determining at least one first RB of the first plurality of RBs to be valid for a bit of the bit map in response to the at least one first RB overlapping with the at least one DL subband and at least one second RB of the first plurality of RBs overlapping with the UL subband.

6. The method of claim 5, **characterized in that** the method further comprises:
determining the at least one second RB to be invalid for the bit of the bit map.

7. The method of claim 1, **characterized in that** the method further comprises:
partitioning the first frequency domain resource according to a size with a second plurality of RBs, to generate a plurality of partitions.

8. The method of claim 7, **characterized in that** the method further comprises:
performing a plurality of channel estimations for the plurality of partitions, respectively.

9. The method of claim 7, **characterized in that** the method further comprises at least one of following operations:
determining at least one third RB within a partition of the plurality of partitions overlapping with the at least one DL subband to be valid; and
determining at least one fourth RB within the partition overlapping with the UL subband to be invalid in response to the partition overlapping with the at least one DL subband and the UL subband simultaneously.

10. The method of claim 9, **characterized in that** the method further comprises:
performing a channel estimation for the partition by the at least one third RB overlapping with the at least one DL subband.

11. The method of claim 1, **characterized in that** a periodic DL signal for the periodic DL signal reception comprises a plurality of candidate DL signals, and the method further comprises:
disabling receiving at least one candidate DL signal of the plurality of candidate DL signals from the network in response to the at least one candidate DL signal overlapping with the UL subband.

12. The method of claim 1, **characterized in that** the second configuration further indicates a number of candidate DL signals for the periodic DL signal reception, and the method further comprises at least one of following operations:
determining whether a plurality of candidate DL signals for the periodic DL signal reception overlap with the UL subband;
selecting at least one candidate DL signal that does not overlap with the UL subband from the plurality of candidate DL signals, wherein a number of the at least one candidate DL signal is not greater than the number of candidate DL signals; and
disabling selecting any candidate DL signal from the plurality of candidate DL signals in response to the plurality of candidate DL signals overlapping with the UL subband.

13. The method of claim 1, **characterized in that** a periodic DL signal for the periodic DL signal reception is associated with two candidate DL signals, and the method further comprises at least one of following operations:
combining the two candidate DL signals to decode the periodic DL signal and counting three candidate DL signals for the periodic DL signal in response to the two candidate DL signals not overlapping with the UL subband;
disabling combining the two candidate DL signals to decode the periodic DL signal and counting one candidate DL signal for the periodic DL signal in response to one of the two candidate DL signals not overlapping with the UL subband; and
counting zero candidate DL signals for the periodic DL signal in response to the two candidate DL signals overlapping with the UL subband.

14. The method of claim 1, **characterized in that** the second configuration further indicates a number of candidate DL signals for the periodic DL signal reception, a periodic DL signal for the periodic DL signal reception is associated with a DCI format, and the method further comprises at least one of following operations:
searching a first candidate DL signal that does not overlap with the UL subband for the DCI format in response to the number of candidate DL signals being one; and
searching the first candidate DL signal and a second candidate DL signal that do not overlap with the UL subband for the DCI format in response to the number of candidate DL signals being two.

15. The method of claim 1, **characterized in that** the method further comprises at least one of following operations:
receiving a fourth configuration from the network to indicate a preconfigured code rate;
receiving a periodic DL signal for the periodic DL signal reception from the network in response to a code rate of the first frequency domain resource overlapping with the at least one DL subband not being greater than the preconfigured code rate; and
disabling receiving the periodic DL signal for the periodic DL signal reception from the network in response to the code rate of the first frequency domain resource overlapping with the at least one DL subband being greater than the preconfigured code rate.

16. The method of claim 1, **characterized in that** the second configuration further indicates a plurality of aggregation levels, ALs, for the periodic DL signal reception, and the method further comprises performing at least one of following operations:
receiving a periodic DL signal for the periodic DL signal reception from the network in response to a code rate of the first frequency domain resource overlapping with the at least one DL subband not being greater than a minimum AL of the plurality of ALs; and
disabling receiving the periodic DL signal for the periodic DL signal reception from the network in response to the code rate of the first frequency domain resource overlapping with the at least one DL subband being greater than the minimum AL of the plurality of ALs.

17. The method of claim 1, **characterized in that** the second configuration further indicates a second frequency domain resource for the periodic DL signal reception, and the method further comprises performing at least one of following operations:
receiving a periodic DL signal for the periodic DL signal reception from the network via the second frequency domain resource in response to the periodic DL signal being within the time period of the SBFD resource;
disabling receiving the periodic DL signal for the periodic DL signal reception from the network via the second frequency domain resource in response to the periodic DL signal not being within the time period of the SBFD resource; and
receiving the periodic DL signal for the periodic DL signal reception from the network via the first frequency domain resource in response to the periodic DL signal not being within the time period of the SBFD resource.

18. The method of claim 1, **characterized in that** the method further comprises:
disabling receiving a periodic DL signal for the periodic DL signal reception from the network in response to the first frequency domain resource overlapping with the UL subband.

19. A communication device (14) for handling a downlink, DL, signal reception, **characterized by**
at least one storage device; and
at least one processing circuit, coupled to the at least one storage device, wherein the at least one storage device is configured to store instructions, and the at least one processing circuit is configured to execute the instructions of
receiving a first configuration from a network to indicate a subband non-overlapping full duplex (SBFD) resource, wherein the first configuration indicates a time period for the SBFD resource and indicates at least one DL subband and a UL subband for the SBFD resource (302);
receiving a second configuration from the network to indicate a periodic DL signal reception, wherein the second configuration indicates a first frequency domain resource for the periodic DL signal reception (304);
receiving a third configuration from the network to indicate a bandwidth part (BWP) configuration; and
performing at least one communication operation with the network according to the first configuration, the second configuration and the third configuration.

20. A method for a network (12) configuring a downlink, DL, signal reception, **characterized by**
transmitting a first configuration to a communication device to indicate a subband non-overlapping full duplex (SBFD) resource, wherein the first configuration indicates a time period for the SBFD resource and indicates at least one DL subband and a UL subband for the SBFD resource (2502);
transmitting a second configuration to the communication device to indicate a periodic DL signal reception, wherein the second configuration indicates a first frequency domain resource for the periodic DL signal reception (2504);
transmitting a third configuration to the communication device to indicate a bandwidth part (BWP) configuration; and
performing at least one communication operation with the communication device according to the first configuration, the second configuration and the third configuration.
